# EUROPEAN PATENT APPLICATION

(11) **EP 3 128 417 A1**
(43) Date of publication of application: **08.02.2017**
(21) Application number: 16181497.5
(22) Date of filing: 27.07.2016
(51) Int. Cl.: G06F 9/44, G06F 3/048, G06F 21/62, H04L 12/28

(54) **METHOD, DEVICE AND SYSTEM FOR STARTING TARGET FUNCTION**

(30) Priority: 31.07.2015 CN 201510463327
(71) Applicant: Xiaomi Inc., Beijing 100085 (CN)
(72) Inventor: FU, Qiang, BEIJING, 100085 (CN); YIN, Mingjun, BEIJING, 100085 (CN); HOU, Enxing, BEIJING, 100085 (CN)
(74) Representative: Delumeau, François Guy

(57) **Abstract**

The present invention relates to a method, a device and a system for starting a target function on a target device, and pertains to the field of the communications technology. The method includes: receiving (201) at a terminal a preset trigger instruction associated with a target function of a target device external to the terminal; displaying (202) at the terminal a trigger button of the target function according to the preset trigger instruction; receiving (203) at the terminal a starting instruction generated by triggering the trigger button of the target function; and starting (204) the target function on the target device according to the starting instruction. The present invention achieves an effect of simplifying a starting process of a target function on an external device. The present invention is configured to start a target function.

## Description

### TECHNICAL FIELD

The present invention generally relates to the field of communications technology, and more particularly, to a method, a device and a system for starting a target function.

### BACKGROUND

With continuous development of electronic technologies, there are more and more extensive applications designed for electronic devices based on the electronic technologies. The electronic devices include, for example, a smart camera, a smart power plug or the like. And generally an electronic device has certain functions. For example, a smart camera may have a talkback function, and a user may bind the smart camera to a user account by virtue of an application (Application, hereinafter referred to as App) installed on a terminal (for example, a mobile phone), so that voice talkback (two-way voice communication) may be achieved between a user of the smart camera and a user of the terminal.

In related technologies, after a smart camera is bound to a user account, if a user logs the user account onto an App of a terminal, an interface of the App is displayed with a device identifier of the smart camera, then the user may click the device identifier of the smart camera to trigger the terminal to enter a control interface for the smart camera. The control interface may display real-time video taken by the smart camera, so that the user may view, on the terminal, the real-time video taken by the smart camera, and the control interface may also display a "microphone" button, so that the user may operate the "microphone" button to trigger the terminal to start a talkback function of the smart camera.

### SUMMARY

In order to achieve a beneficial effect of simplifying the process of starting a target function, there are provided a method, a device and a system for starting a target function according to embodiments of the present invention. The technical solution is as below:
According to a first aspect of the embodiment of the present invention, there is provided a method for starting a target function of a target device, the method comprising:
   receiving at a terminal a preset trigger instruction associated with a target function of a target device external to said terminal;
   displaying on the terminal a trigger button of the target function according to the preset trigger instruction;
   receiving at the terminal a starting instruction generated by triggering of the trigger button; and
   starting the target function of the external device according to the starting instruction.
   Optionally, the receiving of a preset trigger instruction associated with a target function includes:
   receiving a wake-up instruction for a screen of a terminal, where the wake-up instruction includes: either of a preset grip gesture instruction and a preset button operation instruction, the preset grip gesture instruction is an instruction generated by gripping the terminal with a preset grip gesture, and the preset button operation instruction is an instruction generated by triggering a wake-up button of the terminal with a preset touch gesture;
   waking up, according to the wake-up instruction, the screen of the terminal, and displaying a lock-screen interface; and
   receiving, on the lock-screen interface, a preset trigger instruction associated with the target function.

Optionally, the displaying of a trigger button of the target function according to the preset trigger instruction includes:
acquiring an identifier of a user account logged in a client side associated with a target device, where the target device has the target function;
acquiring, from a server, display information of the target function of the target device bound to the user account; and
displaying the trigger button of the target function according to the display information of the target function.

Optionally, the acquiring, from a server, of display information of the target function of the target device bound to the user account includes:
sending an identifier of the user account to the server, where the server is configured to determine, according to the user account, function display information of a set of functions of the device bound to the user account, and the set of functions includes the target function of the target device; and
receiving the function display information, sent by the server, of various functions in the set of functions;
the displaying of the trigger button of the target function according to the display information of the target function includes:
displaying, according to the function display information of various functions in the set of functions, trigger buttons of various functions in the set of functions.

Optionally, the acquiring, from a server, of display information of the target function of the target device bound to the user account includes:
querying a pre-stored correspondence relation between a trigger instruction and a device function identifier, so as to regard the device function identifier corresponding to the preset trigger instruction as a target identifier, where the target identifier includes a device identifier of the target device and an identifier of the target function;
sending the user account identifier and the target identifier to the server, where the server is configured to determine, according to the user account, a relation list corresponding to the user account, and the relation list records a pre-established correspondence relation between a device function identifier and function display information; and
receiving display information, sent by the server, of the target function corresponding to the target identifier, where the display information of the target function corresponding to the target identifier is determined by the server by querying the relation list.

Optionally, the acquiring, from a server, of display information of the target function of the target device bound to the user account includes:
querying a pre-stored correspondence relation between a trigger instruction and a device identifier, so as to regard the device identifier corresponding to the preset trigger instruction as a device identifier of the target device;
sending the user account identifier and the device identifier of the target device to the server, where the server is configured to determine, according to the user account, a relation list corresponding to the user account, and the relation list records a pre-established correspondence relation between a device identifier and function display information; and
receiving the function display information, sent by the server, corresponding to the device identifier of the target device, where the function display information corresponding to the device identifier of the target device is determined by the server by querying the relation list.

The displaying of the trigger button of the target function according to the display information of the target function may include:
displaying, according to the function display information corresponding to the device identifier of the target device, a trigger button of a function corresponding to the device identifier of the target device, where the trigger button of the function corresponding to the device identifier of the target device includes the trigger button of the target function.

Optionally, the acquiring, from a server, of display information of the target function of the target device bound to the user account includes:
sending the user account identifier to the server, where the server is configured to determine, according to the user account, a device identifier list of devices bound to the user account, and the device identifier list includes a device identifier of the target device and the display information of the target function; and
receiving the device identifier list, sent by the server, of the devices bound to the user account.

The displaying of the trigger button of the target function according to the display information of the target function may include:
displaying a device identifier list, where the display information of the target function is displayed in the form of a trigger button of the target function.

Optionally, the acquiring, from a server, display information of the target function of the target device bound to the user account may include:
sending the user account identifier to the server, where the server is configured to determine, according to the user account, a device identifier list of devices bound to the user account, and the device identifier list includes a device identifier of the target device;
receiving the device identifier list, sent by the server, of the devices bound to the user account;
displaying the device identifier list;
receiving a touch instruction generated by triggering the device identifier of the target device;
sending the touch instruction to the server, where the server is configured to determine, according to the touch instruction, display information of a control interface corresponding to the device identifier of the target device, and the display information of a control interface includes the display information of the target function; and
receiving the display information of the control interface sent by the server.

The displaying of the trigger button of the target function according to the display information of the target function may include:
displaying the control interface according to the display information of the control interface, where the control interface includes the trigger button of the target function.

Optionally, the target device may be a camera, and the target function may be a talkback function.

According to a second aspect of the present invention, there is provided a method for starting a target function, and the method includes:
receiving a user account identifier sent by a terminal, where the user account identifier is sent by the terminal after receiving a preset trigger instruction associated with a target function, the user account is a user account logged in a client side associated with a target device, and the target device has the target function;
acquiring display information of the target function of the target device bound to the user account; and
sending the display information of the target function to the terminal, where the terminal is configured to: display, according to the display information of the target function, a trigger button of the target function, and start the target function according to a starting instruction generated by triggering the trigger button of the target function.

Optionally, the acquiring display information of the target function of the target device bound to the user account may include:
determining, according to the user account, function display information of various functions in a set of functions of the device bound to the user account, and the set of functions includes the target function of the target device; and
the sending the display information of the target function to the terminal includes:
   sending the function display information of various functions in the set of functions to the terminal, where the terminal is configured to display, according to the function display information of various functions in the set of functions, trigger buttons of various functions in the set of functions.

Optionally, the acquiring display information of the target function of the target device bound to the user account includes:
receiving the user account and a target identifier sent by the terminal, where the target identifier is obtained by the terminal by querying, according to the preset trigger instruction, a pre-stored correspondence relation between a trigger instruction and a device function identifier, and the target identifier includes a device identifier of the target device and an identifier of the target function;
determining, according to the user account, a relation list corresponding to the user account, where the relation list records a pre-established correspondence relation between a device function identifier and function display information; and
querying the relation list to determine the display information of the target function corresponding to the target identifier.

Optionally, the acquiring display information of the target function of the target device bound to the user account includes:
receiving the user account and a device identifier of the target device sent by the terminal, where the device identifier of the target device is obtained by the terminal by querying, according to the preset trigger instruction, a pre-stored correspondence relation between a trigger instruction and the device identifier;
determining, according to the user account, a relation list corresponding to the user account, where the relation list records a pre-established correspondence relation between a device identifier and function display information; and
querying the relation list to determine the function display information corresponding to the device identifier of the target device;
the sending the display information of the target function to the terminal includes:
sending the function display information corresponding to the device identifier of the target device to the terminal, where the terminal is configured to display, according to the function display information corresponding to the device identifier of the target device, a trigger button of a function corresponding to the device identifier of the target device, and the trigger button of a function corresponding to the device identifier of the target device includes the trigger button of the target function.

Optionally, the acquiring display information of the target function of the target device bound to the user account includes:
determining, according to the user account, a device identifier list of devices bound to the user account, where the device identifier list includes a device identifier of the target device and the display information of the target function;
the sending the display information of the target function to the terminal includes:
   sending the device identifier list of the devices bound to the user account to the terminal, where the terminal is configured to display the device identifier list, and the display information of the target function is displayed in the form of the trigger button of the target function.

Optionally, the acquiring display information of the target function of the target device bound to the user account includes:
determining, according to the user account, a device identifier list of devices bound to the user account, where the device identifier list includes a device identifier of the target device;
sending the device identifier list to the terminal, where the terminal is configured to display the device identifier list and receive a touch instruction generated by triggering the device identifier of the target device;
receiving the touch instruction sent by the terminal; and
determining, according to the touch instruction, display information of a control interface corresponding to the device identifier of the target device, where the display information of a control interface includes the display information of the target function;
the sending the display information of the target function to the terminal includes:
sending the display information of the control interface to the terminal, where the terminal is configured to display the control interface according to the display information of the control interface, and the control interface includes the trigger button of the target function.

Optionally, the target device is a camera, and the target function is a talkback function.

According to a third aspect of the embodiment of the present invention, there is provided a device for starting a target function, and the device includes:
a first receiving module configured to receive, at a terminal, a preset trigger instruction associated with a target function of a target device external to the terminal;
a display module configured to display on the terminal a trigger button of the target function according to the preset trigger instruction;
a second receiving module configured to receive a starting instruction generated by triggering the trigger button of the target function; and
a starting module configured to start the target function of the external device, according to the starting instruction.

Optionally, the first receiving module is configured to: receive a wake-up instruction for a screen of a terminal, where the wake-up instruction includes: either of a preset grip gesture instruction and a preset button operation instruction, the preset grip gesture instruction is an instruction generated by gripping the terminal with a preset grip gesture, and the preset button operation instruction is an instruction generated by triggering a wake-up button of the terminal with a preset touch gesture; wake up, according to the wake-up instruction, the screen of the terminal, and display a screen-lock interface; and receive, on the screen-lock interface, a preset trigger instruction associated with the target function.

Optionally, the control display module includes:
a first acquiring submodule configured to acquire a user account logged in a client side associated with a target device, where the target device has the target function;
a second acquiring submodule configured to acquire, from a server, display information of the target function of the target device bound to the user account; and
a display submodule configured to display the trigger button of the target function according to the display information of the target function.

Optionally, the second acquiring submodule is configured to: send the user account to the server, where the server is configured to determine, according to the user account, function display information of various functions in a set of functions, the set of functions is a set of functions of the device bound to the user account, and the set of functions includes the target function of the target device; and receive the function display information, sent by the server, of various functions in the set of functions; and
the display submodule is configured to display, according to the function display information of various functions in the set of functions, trigger buttons of various functions in the set of functions.

Optionally, the second acquiring submodule is configured to: query a pre-stored correspondence relation between a trigger instruction and a device function identifier, so as to regard the device function identifier corresponding to the preset trigger instruction as a target identifier, where the target identifier includes a device identifier of the target device and an identifier of the target function; send the user account and the target identifier to the server, where the server is configured to determine, according to the user account, a relation list corresponding to the user account, the relation list records a pre-established correspondence relation between a device function identifier and function display information; and receive display information, sent by the server, of the target function corresponding to the target identifier, where the display information of the target function corresponding to the target identifier is determined by the server by querying the relation list.

Optionally, the second acquiring submodule is configured to: query a pre-stored correspondence relation between a trigger instruction and a device identifier, so as to regard the device identifier corresponding to the preset trigger instruction as a device identifier of the target device; send the user account and the device identifier of the target device to the server, where the server is configured to determine, according to the user account, a relation list corresponding to the user account, and the relation list records a pre-established correspondence relation between a device identifier and function display information; and receive the function display information, sent by the server, corresponding to the device identifier of the target device, where the function display information corresponding to the device identifier of the target device is determined by the server by querying the relation list; and
the display submodule is configured to display, according to the function display information corresponding to the device identifier of the target device, a trigger button of a function corresponding to the device identifier of the target device, where the trigger button of the function corresponding to the device identifier of the target device includes the trigger button of the target function.

Optionally, the second acquiring submodule is configured to: send the user account to the server, where the server is configured to determine, according to the user account, a device identifier list of devices bound to the user account, and the device identifier list includes a device identifier of the target device and the display information of the target function; and receive the device identifier list, sent by the server, of the devices bound to the user account; and
the display submodule is configured to display the device identifier list, where the display information of the target function is displayed in the form of the trigger button of the target function.

Optionally, the second acquiring submodule is configured to: send the user account to the server, where the server is configured to determine, according to the user account, a device identifier list of devices bound to the user account, and the device identifier list includes a device identifier of the target device; receive the device identifier list, sent by the server, of the devices bound to the user account; display the device identifier list; receive a touch instruction generated by triggering the device identifier of the target device; send the touch instruction to the server, where the server is configured to determine, according to the touch instruction, display information of a control interface corresponding to the device identifier of the target device, and the display information of the control interface includes the display information of the target function; and receive the display information of the control interface sent by the server; and
the display submodule is configured to display the control interface according to the display information of a control interface, where the control interface includes the trigger button of the target function.

Optionally, the target device is a camera, and the target function is a talkback function.

According to a fourth aspect of the embodiment of the present invention, there is provided a device for starting a target function, and the device includes:
a receiving module configured to receive a user account sent by a terminal, where the user account is sent by the terminal after receiving a preset trigger instruction associated with a target function, the user account is a user account logged in a client side associated with a target device, and the target device has the target function;
an acquiring module configured to acquire display information of the target function of the target device bound to the user account; and
a sending module configured to send the display information of the target function to the terminal, where the terminal is configured to: display, according to the display information of the target function, a trigger button of the target function, and start the target function according to a starting instruction generated by triggering the trigger button of the target function.

Optionally, the acquiring module is configured to determine, according to the user account, function display information of various functions in a set of functions, where the set of functions is a set of functions of the device bound to the user account, and the set of functions includes the target function of the target device; and
the sending module is configured to send the function display information of various functions in the set of functions to the terminal, where the terminal is configured to display, according to the function display information of various functions in the set of functions, trigger buttons of various functions in the set of functions.

Optionally, the acquiring module is configured to: receive the user account and a target identifier sent by the terminal, where the target identifier is obtained by the terminal by querying, according to the preset trigger instruction, a pre-stored correspondence relation between a trigger instruction and a device function identifier, and the target identifier includes a device identifier of the target device and an identifier of the target function; determine, according to the user account, a relation list corresponding to the user account, where the relation list records a pre-established correspondence relation between a device function identifier and function display information; and query the relation list to determine the display information of the target function corresponding to the target identifier.

Optionally, the acquiring module is configured to: receive the user account and a device identifier of the target device sent by the terminal, where the device identifier of the target device is obtained by the terminal by querying, according to the preset trigger instruction, a pre-stored correspondence relation between a trigger instruction and the device identifier; determine, according to the user account, a relation list corresponding to the user account, where the relation list records a pre-established correspondence relation between a device identifier and function display information; and query the relation list to determine the function display information corresponding to the device identifier of the target device; and
the sending module is configured to: send the function display information corresponding to the device identifier of the target device to the terminal, where the terminal is configured to display, according to the function display information corresponding to the device identifier of the target device, a trigger button of a function corresponding to the device identifier of the target device, and the trigger button of a function corresponding to the device identifier of the target device includes the trigger button of the target function.
the acquiring module is configured to determine, according to the user account, a device identifier list of devices bound to the user account, where the device identifier list includes a device identifier of the target device and the display information of the target function; and
the sending module is configured to send the device identifier list of the devices bound to the user account to the terminal, where the terminal is configured to display the device identifier list, and the display information of the target function is displayed in the form of the trigger button of the target function.

Optionally, the acquiring module is configured to: determine, according to the user account, a device identifier list of devices bound to the user account, where the device identifier list includes a device identifier of the target device; send the device identifier list to the terminal, where the terminal is configured to display the device identifier list and receive a touch instruction generated by triggering the device identifier of the target device; receive the touch instruction sent by the terminal; and determine, according to the touch instruction, display information of a control interface corresponding to the device identifier of the target device, where the display information of a control interface includes the display information of the target function; and
the sending module is configured to send the display information of the control interface to the terminal, where the terminal is configured to display the control interface according to the display information of the control interface, and the control interface includes the trigger button of the target function.

Optionally, the target device is a camera, and the target function is a talkback function.

According to a fifth aspect of the embodiment of the present invention, there is provided a device for starting a target function, including:
a processor; and
a memory configured to store instructions executable by the processor;
where the processor is configured to:
receive a preset trigger instruction associated with a target function;
display a trigger button of the target function according to the preset trigger instruction;
receive a starting instruction generated by triggering the trigger button of the target function; and
start the target function according to the starting instruction.

According to a sixth aspect of the embodiment of the present invention, there is provided a device for starting a target function, including:
a processor; and
a memory configured to store instructions executable by the processor;
where the processor is configured to:
receive a user account sent by a terminal, where the user account is sent by the terminal after receiving a preset trigger instruction associated with a target function, the user account is a user account logged in a client side associated with a target device, and the target device has the target function;
acquire display information of the target function of the target device bound to the user account; and
send the display information of the target function to the terminal, where the terminal is configured to: display, according to the display information of the target function, a trigger button of the target function, and start the target function according to a starting instruction generated by triggering the trigger button of the target function.

According to a seventh aspect of the embodiment of the present invention, there is provided a system for starting a target function, and the system includes: a terminal and a server, where
the terminal includes the device for starting a target function according to the third aspect or any optional mode of the third aspect; and
the server includes the device for starting a target function according to the fourth aspect or any optional mode of the fourth aspect.

According to an eighth aspect of the embodiment of the present invention, there is provided a system for starting a target function, and the system includes: a terminal and a server, where
the terminal includes the device for starting a target function according to the fifth aspect; and
the server includes the device for starting a target function according to the sixth aspect.

According to a ninth aspect of the embodiment of the present invention, there is provided a computer program product which, when being executed on a processor of an apparatus, performs any one of the above methods.

The technical scheme according to embodiments of the present invention may have the following beneficial effects:
In the method, device and system for starting a target function according to some embodiments of the present invention, a preset trigger instruction associated with a target function is received; a trigger button of the target function is displayed according to the preset trigger instruction; a starting instruction generated by triggering the trigger button of the target function is received; and the target function is started according to the starting instruction. It is possible to start the target function needless of logging, at a foreground, into a client side and entering a control interface, thereby solving the problem, in the related technologies, of a complex process in starting a target function, and achieving an effect of simplifying the process in starting the target function.

It will be appreciated that both the foregoing general description and the following detailed description are and explanatory only and are not restrictive of the present invention.

### BRIEF DESCRIPTION OF THE DRAWINGS

To describe the embodiments of the present invention more clearly, the following briefly introduces the accompanying drawings required for describing the embodiments. The accompanying drawings referenced in the following description show just some embodiments of the present invention, for the purposes of illustration and not limitation, and persons of ordinary skill in the art may still derive other drawings from these accompanying drawings without creative effort.
Fig. 1 is a structural schematic diagram of an implementation environment involved in embodiments of the present invention;
Fig. 2 is a flowchart of a method for starting a target function according to an example embodiment;
Fig. 3 is a flowchart of a method for starting a target function according to another example embodiment;
Fig. 4-1 is a flowchart of a method for starting a target function according to still another example embodiment;
Fig. 4-2 is a flowchart of a method for receiving, by a terminal, a preset trigger instruction associated with a target function according to the embodiment as shown in Fig. 4-1;
Fig. 4-3 is a flowchart of a method for displaying, by the terminal, a trigger button of the target function according to the preset trigger instruction according to the embodiment as shown in Fig. 4-1;
Fig. 4-4 is a flowchart of a method for acquiring, by the terminal from a server, display information of the target function of a target device bound to a user account according to the embodiment as shown in Fig. 4-1;

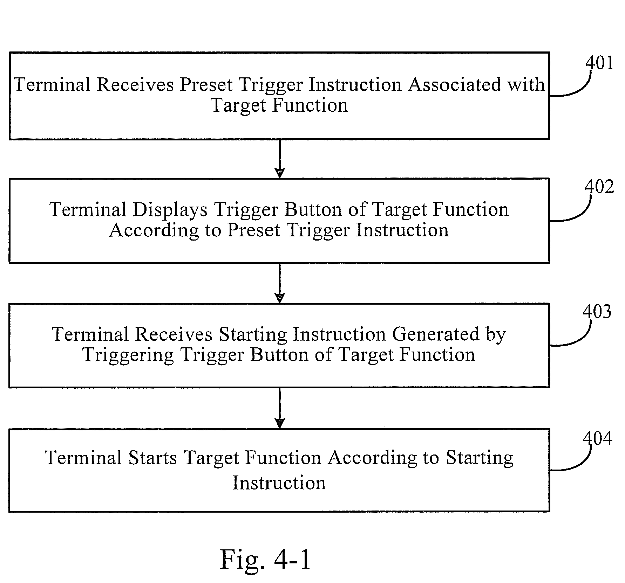

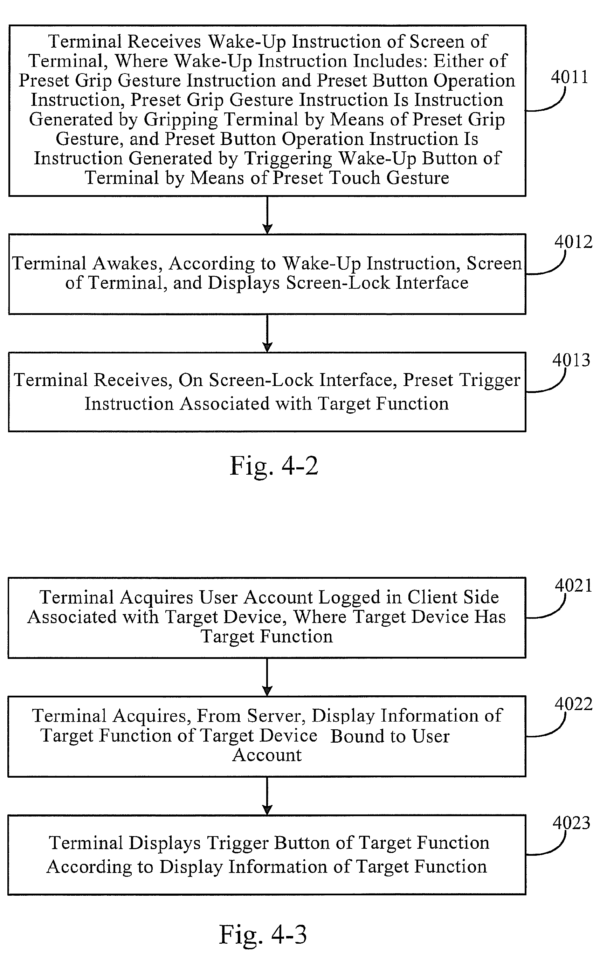

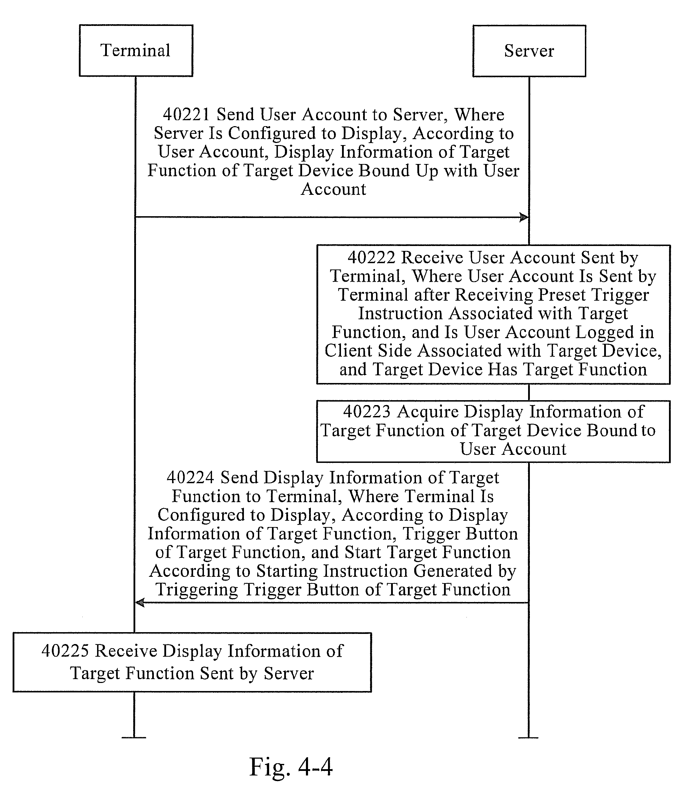

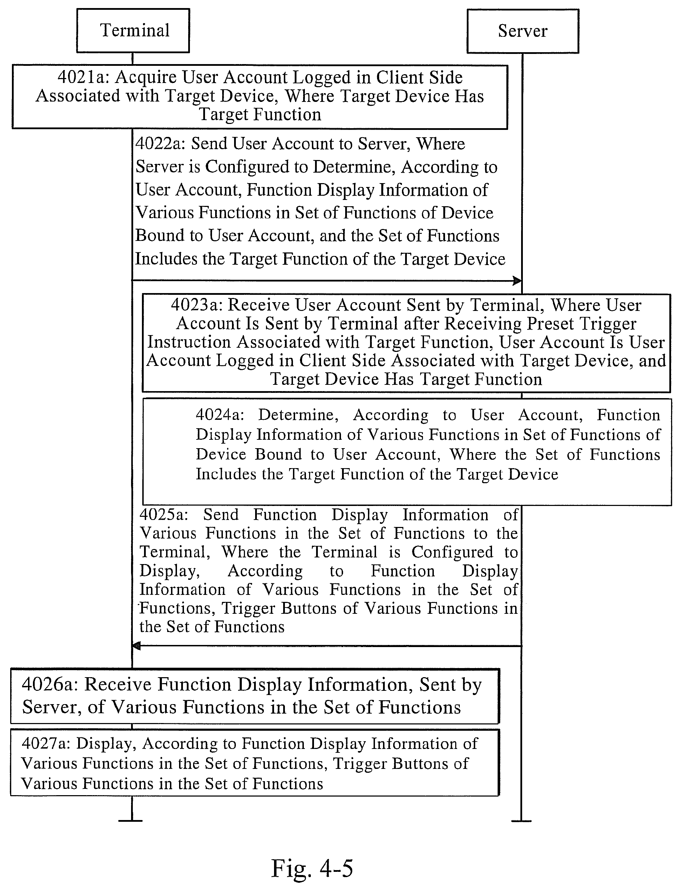

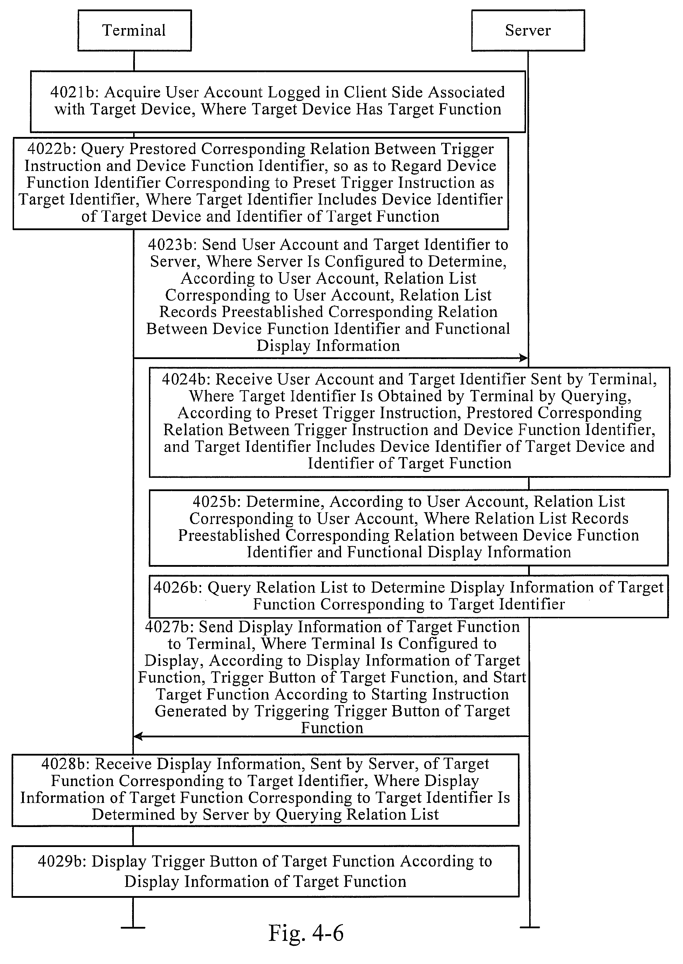

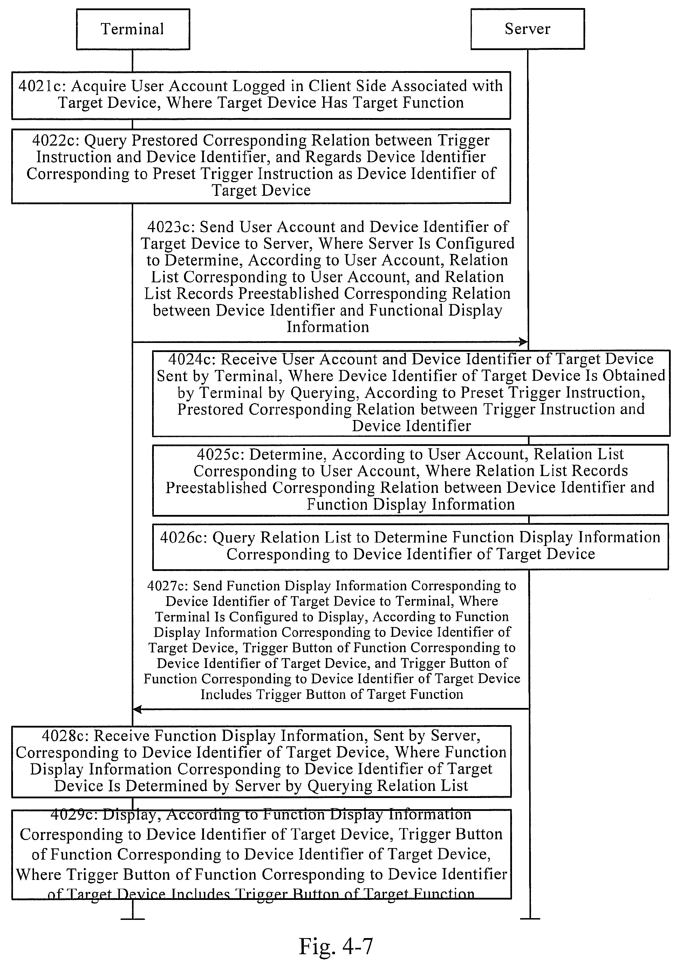

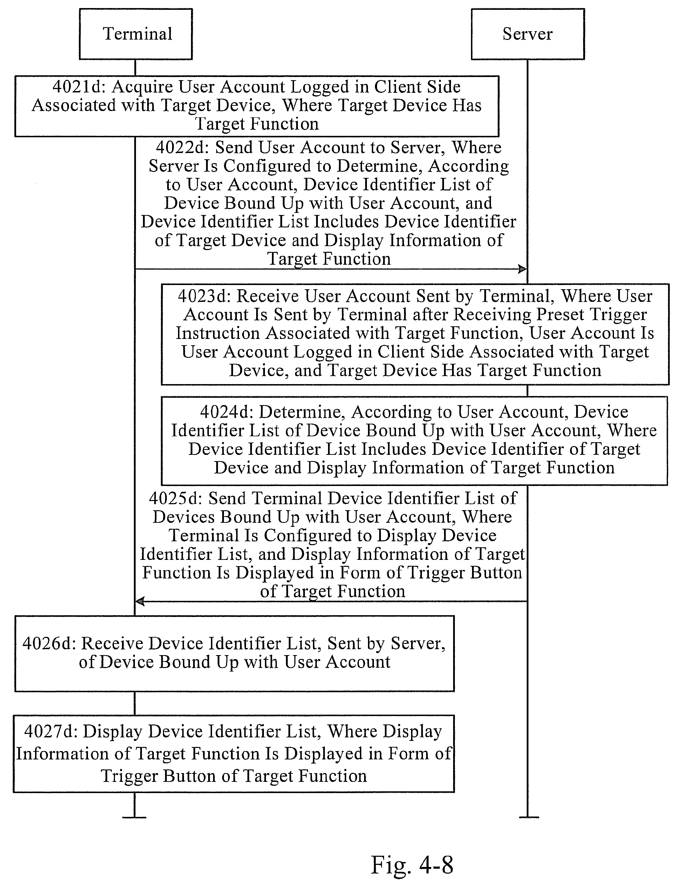

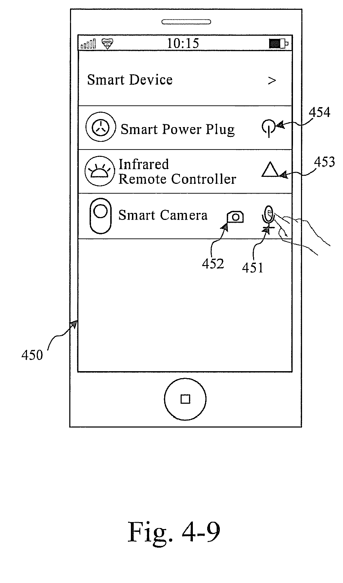

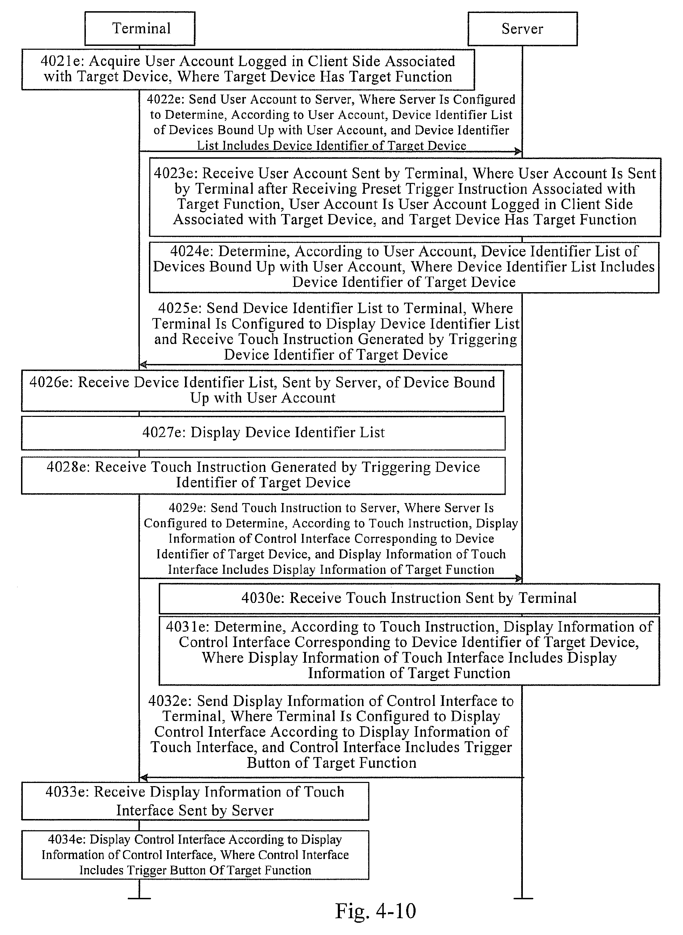

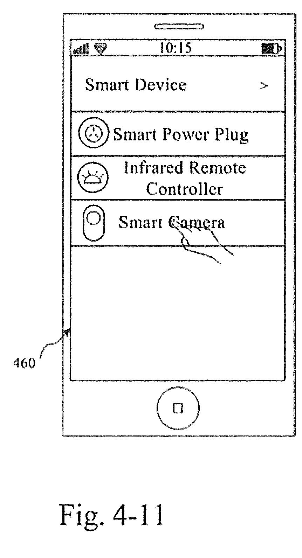

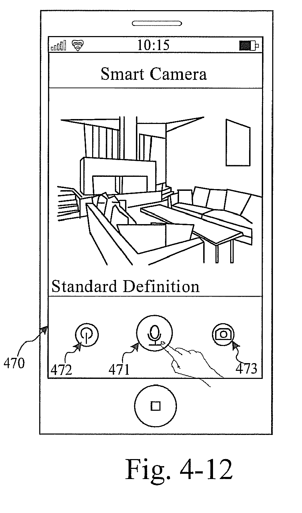

Fig. 4-5 is a flowchart of a method for displaying, by the terminal, a trigger button of the target function according to the preset trigger instruction according to the embodiment as shown in Fig. 4-1;
Fig. 4-6 is a flowchart of another method for displaying, by the terminal, a trigger button of the target function according to the preset trigger instruction according to the embodiment as shown in Fig. 4-1;
Fig. 4-7 is a flowchart of still another method for displaying, by the terminal, a trigger button of the target function according to the preset trigger instruction according to the embodiment as shown in Fig. 4-1;
Fig. 4-8 is a flowchart of still another method for displaying, by the terminal, a trigger button of the target function according to the preset trigger instruction according to the embodiment as shown in Fig. 4-1;
Fig. 4-9 illustrates an interface of a terminal according to the embodiment as shown in Fig. 4-1;
Fig. 4-10 is a flowchart of still another method for displaying, by the terminal, a trigger button of the target function according to the preset trigger instruction according to the embodiment as shown in Fig. 4-1;
Fig. 4-11 illustrates another interface of the terminal according to the embodiment as shown in Fig. 4-1;
Fig. 4-12 illustrates still another interface of the terminal according to the embodiment as shown in Fig. 4-1;

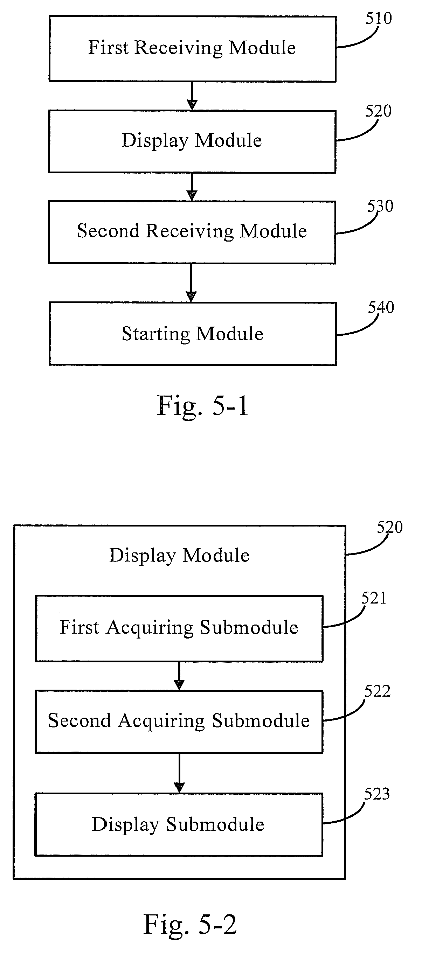

Fig. 5-1 is a block diagram of a device for starting a target function according to an example embodiment;
Fig. 5-2 is a block diagram of a display module according to the embodiment as shown in Fig. 5-1;

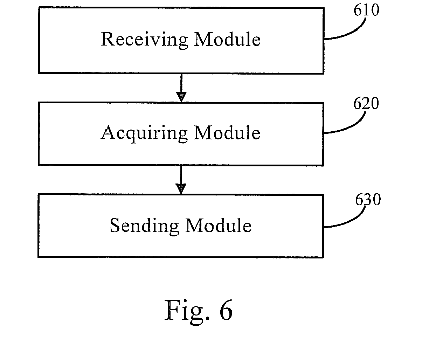

Fig. 6 is a block diagram of a device for starting a target function according to another example embodiment;

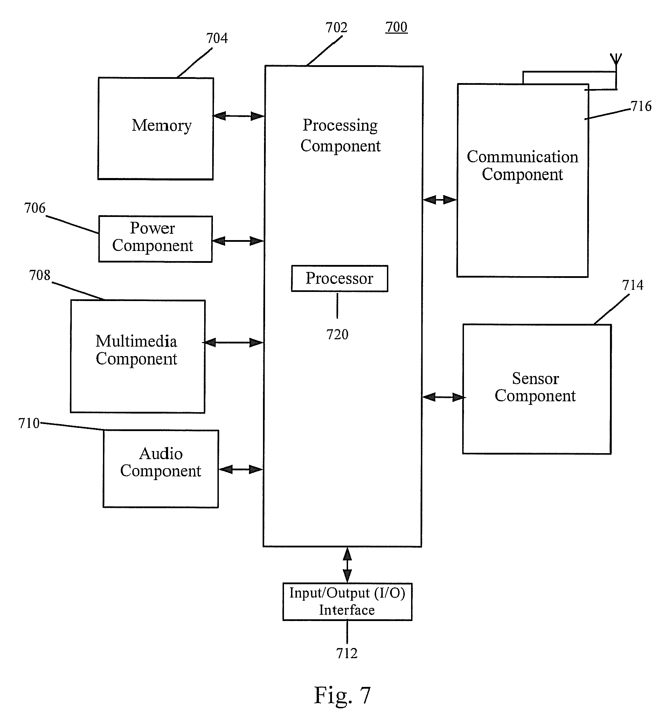

Fig. 7 is a block diagram of a device for starting a target function according to an example embodiment;

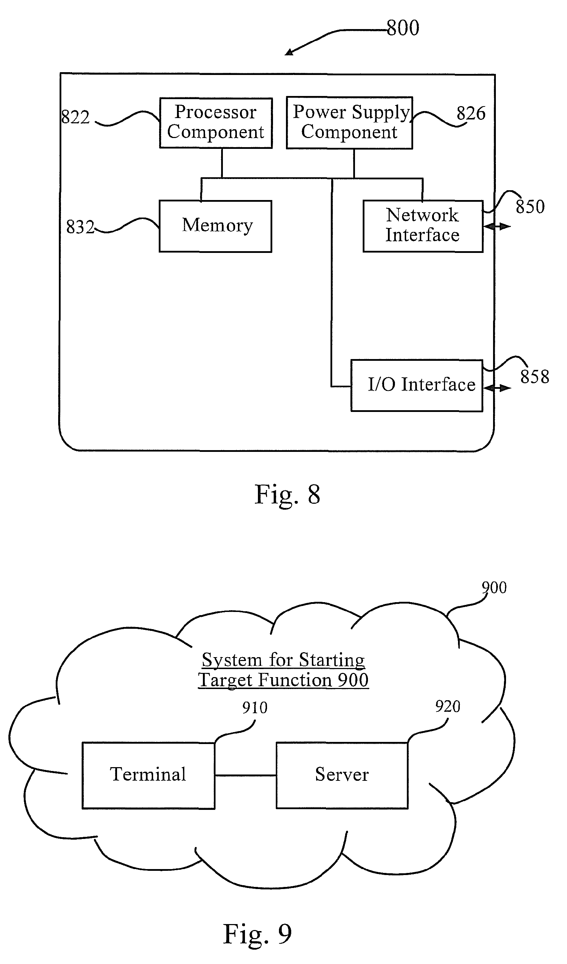

Fig. 8 is a block diagram of a device for starting a target function according to another example embodiment; and
Fig. 9 is a structural schematic diagram of a system for starting a target function according to an example embodiment.

The accompanying drawings, which are incorporated in and constitute a part of this specification, illustrate embodiments consistent with the invention and, together with the description, serve to explain the principles of the invention.

### DESCRIPTION OF THE EMBODIMENTS

To make the objectives, technical solutions, and advantages of the present invention clearer, the following further describes in detail certain example embodiments of the present invention with reference to the accompanying drawings. The described embodiments are some but not all of the embodiments of the present invention. All other embodiments obtained by persons of ordinary skill in the art based on the embodiments of the present invention without creative efforts shall fall within the protection scope of the present invention.

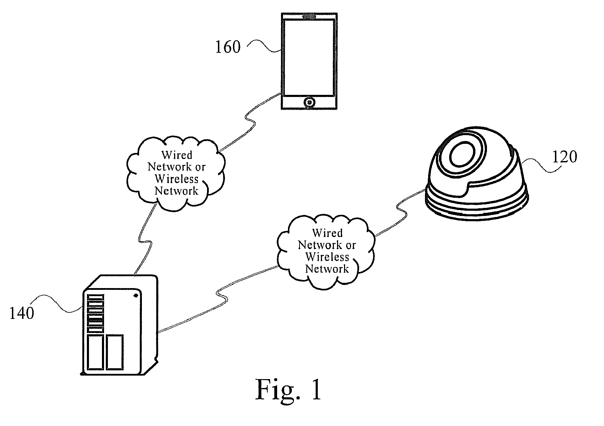

Fig. 1 is a structural schematic diagram of an implementation environment involved in a method for starting a target function according to embodiments of the present invention. Referring to Fig. 1, the implementation environment includes a target device 120, a server 140 and a terminal 160. The target device 120 and the terminal 160 are respectively connected to the server 140 through a wired network or a wireless network.

The target device 120 may be a smart device having a target function, for example, the target device 120 may be a smart camera, a smart power plug, a smart wristband, a smart television, an infrared remote controller, and so on. Referring to Fig. 1, the implementation environment is described by taking an example in which the target device 120 is a smart camera having a camera function and a talkback function. In this implementation environment and the following embodiments, the target function is the talkback function of the smart camera.

The server 140 may be a single server apparatus, or a server cluster comprising a plurality of servers, or a cloud computing service center.

The terminal 160 may be an electronic device capable of controlling the target device 120 by means of the server 140. The terminal 160 may be installed with an App and a user may bind the target device 120 to a user account by virtue of the App installed on the terminal 160. The user account refers to one registered in the App, which is associated with the target device 120, on the terminal 160. The terminal 160 may be a smart mobile phone, a tablet computer, a smart television, or a desktop computer and the like. The terminal 160 may receive a preset trigger instruction associated with a target function of the target device 120, display a trigger button of the target function according to the preset trigger instruction, and start the target function of the target device 120 according to the user's triggering of the trigger button.

It should be noted that in this embodiment the user employs the App installed on the terminal 160 to bind the target device 120 with the user account by means of using the server 140 to establish the binding of the target device 120 with the user account. After the target device 120 is bound to the user account, the server 140 may store a correspondence relation indicating the association between the user account and the target device 120. Therefore, the target device 120 may upload data, such as image data, to the server 140 and the server can associate the uploaded data with the appropriate user account. In this implementation environment, the data may be display information of the target function (for example, display information of a talkback function), or display information of a control interface (for example, display information of a camera interface), etc. The server 140 may receive the data uploaded by the target device 120, and store a correspondence relation between the data and the user account bound with the target device 120 that uploads the data.

The terminal 160 may acquire an identifier of the user account logged in the App, acquire, from the server 140, display information of the target function of the target device 120 bound to the user account, and display a trigger button of the target function according to the display information of the target function. Any convenient identifier may be used to identify the user account (a name or code identifying the account, a name or code identifying the user of the account, and so on).

The server 140 may receive an identifier of the user account, sent by the terminal 160, acquire display information of the target function of the target device 120 bound to the user account, and send the display information of the target function to the terminal 160, so that the terminal 160 may display a trigger button of the target function according to the received display information of the target function, and start the target function of the target device 120 according to a user's triggering of the trigger button.

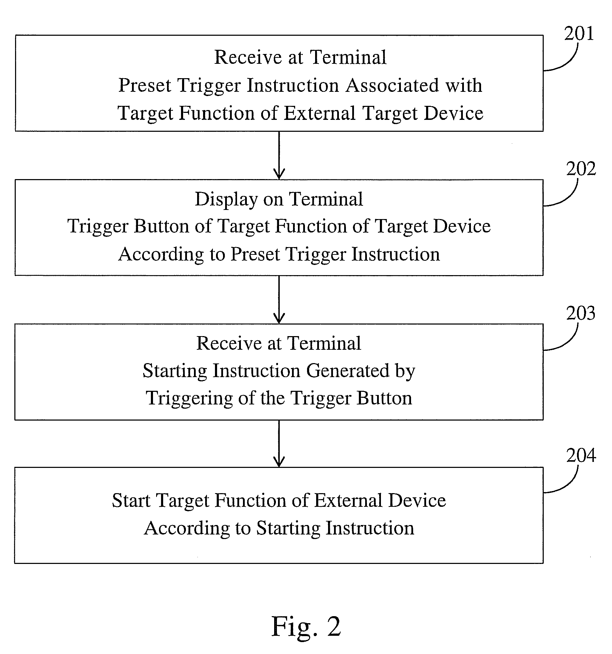

Fig. 2 is a flowchart of a method for starting a target function according to an example embodiment. The method is illustrated for use in the terminal 160 of the implementation environment as shown in Fig.1. Referring to Fig. 2, the method for starting a target function may include the following steps:
In Step 201: the preset trigger instruction associated with the target function is received at the terminal.
In Step 202: at the terminal the trigger button of the target function is displayed according to the preset trigger instruction.
In Step 203: at the terminal a starting instruction generated by triggering the trigger button of the target function is received.
In Step 204: the target function of the target device, external to the terminal, is started according to the starting instruction.

In conclusion, the method for starting a target function according to this embodiment of the present invention includes: receiving at a terminal a preset trigger instruction associated with a target function of a target device that is external to the terminal; displaying on the terminal a trigger button of the target function according to the preset trigger instruction; receiving at the terminal a starting instruction generated by triggering the trigger button of the target function; and starting the target function of the external device according to the starting instruction. It is possible to start the target function without need of logging in, in the foreground, into a client side, or entering a control interface, thereby solving the problem, in the related technologies, of a complex process in starting a target function, and achieving an effect of simplifying the process in starting the target function.

Optionally, Step 201 may include:
receiving a wake-up instruction on a screen of the terminal, where the wake-up instruction includes: either one of a preset grip gesture instruction and a preset button operation instruction, the preset grip gesture instruction is an instruction generated by gripping the terminal with a preset grip gesture, and the preset button operation instruction is an instruction generated by triggering a wake-up button of the terminal with a preset touch gesture;
waking up, according to the wake-up instruction, the screen of the terminal, and displaying a screen-lock interface; and
receiving, on the screen-lock interface, the preset trigger instruction associated with the target function.

Optionally, Step 202 may include:
acquiring an identifier of the user account logged in the client side and associated with the target device, where the target device has the target function;
acquiring, from the server, display information of the target function of the target device bound to the user account; and
displaying the trigger button of the target function according to the display information of the target function.

Optionally, Step 202 may further include:
sending an identifier of the user account to the server, where the server is configured to determine, according to the user account, function display information of various functions in a set of alternative functions, which is a set of functions of the device bound to the user account and includes the target function of the target device; and
receiving the function display information, sent by the server, of various functions in the set of functions.

Step 202 may further include:
displaying, according to the function, display information of various functions in the set of functions, trigger buttons of various functions in the set of functions.

Optionally, Step 202 may further include:
querying a pre-stored correspondence relation between a trigger instruction and a device function identifier, so as to regard a device function identifier corresponding to the preset trigger instruction as a target identifier, where the target identifier includes a device identifier of the target device and an identifier of the target function;
sending a user account identifier and the target identifier to the server, where the server is configured to determine, according to the user account, a relation list corresponding to the user account, the relation list records a pre-established correspondence relation between a device function identifier and function display information; and
receiving display information, sent by the server, of the target function corresponding to the target identifier, where the display information of the target function corresponding to the target identifier is determined by the server by querying the relation list.

Optionally, Step 202 may further include:
querying a pre-stored correspondence relation between a trigger instruction and a device identifier, so as to regard a device identifier corresponding to the preset trigger instruction as a device identifier of the target device;
sending a user account identifier and the device identifier of the target device to the server, where the server is configured to determine, according to the user account, a relation list corresponding to the user account, and the relation list records a pre-established correspondence relation between a device identifier and function display information; and
receiving the function display information, sent by the server, corresponding to the device identifier of the target device, where the function display information corresponding to the device identifier of the target device is determined by the server by querying the relation list.

Step 202 may further include:
displaying, according to the function display information corresponding to the device identifier of the target device, a trigger button of a function corresponding to the device identifier of the target device, where the trigger button of the function corresponding to the device identifier of the target device includes the trigger button of the target function.

Optionally, Step 202 may further include:
sending an identifier of the user account to the server, where the server is configured to determine, according to the user account, a device identifier list of devices bound to the user account, and the device identifier list includes a device identifier of the target device and the display information of the target function; and
receiving the device identifier list, sent by the server, of the devices bound to the user account.

Step 202 may further include:
displaying the device identifier list, where the display information of the target function is displayed in the form of the trigger button of the target function.

Optionally, Step 202 may further include:
sending an identifier of the user account to the server, where the server is configured to determine, according to the user account, a device identifier list of devices bound to the user account, and the device identifier list includes a device identifier of the target device;
receiving the device identifier list, sent by the server, of the devices bound to the user account;
displaying the device identifier list;
receiving a touch instruction generated by triggering the device identifier of the target device;
sending the touch instruction to the server, where the server is configured to determine, according to the touch instruction, display information of a control interface corresponding to the device identifier of the target device, and the display information of the control interface includes the display information of the target function; and
receiving the display information of the control interface sent by the server.

Step 202 may further include:
displaying the control interface according to the display information of the control interface, where the control interface includes the trigger button of the target function.

Optionally, the target device is a camera, and the target function is a talkback function.

In conclusion, the method for starting a target function according to this embodiment of the present invention includes: receiving a preset trigger instruction associated with a target function; displaying a trigger button of the target function according to the preset trigger instruction; receiving a starting instruction generated by triggering the trigger button of the target function; and starting the target function according to the starting instruction. It is possible to start the target function without need for logging in, in the foreground, into a client side and entering a control interface, thereby solving the problem, in the related technologies, of a complex process in starting a target function, and achieving an effect of simplifying the process for starting the target function.

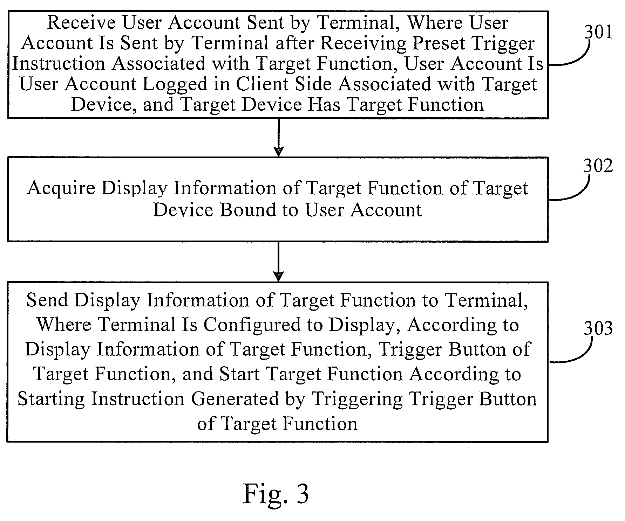

Fig. 3 is a flowchart of a method for starting a target function according to another embodiment. The method is illustrated for use in the server 140 of the implementation environment as shown in Fig.1. Referring to Fig. 3, the method for starting a target function may include the following steps:
In Step 301: an identifier of a user account, sent by the terminal, is received, where the user account identifier is sent by the terminal after receiving the preset trigger instruction associated with the target function, the user account is a user account logged in the client side associated with the target device, and the target device has the target function.
In Step 302: display information of the target function of the target device bound to the identified user account is acquired.
In Step 303: the display information of the target function is sent to the terminal, where the terminal is configured to display, according to the display information of the target function, a trigger button of the target function, and start the target function according to a starting instruction generated by triggering the trigger button of the target function.

In conclusion, in the method for starting a target function according to this embodiment of the present invention, by receiving a user account identifier sent by the terminal, display information of the target function of the target device bound to the user account is acquired, and the display information of the target function is sent to the terminal, so that the terminal may display the trigger button of the target function according to the display information of the target function, and start the target function according to a starting instruction generated by triggering the trigger button of the target function. It is possible to start the target function without the need to log in, in the foreground, into a client side and enter a control interface, thereby solving the problem, in the related technologies, of a complex process in starting a target function, and achieving an effect of simplifying the process in starting the target function.

Optionally, Step 302 may include:
determining, according to the user account, function display information of various functions in a set of functions, where the set of functions is a set of functions of the device bound to the user account, and the set of functions includes the target function of the target device.

Step 303 may include:
sending the function display information of various functions in the set of functions to the terminal, where the terminal is configured to display, according to the function display information of various functions in the set of functions, trigger buttons of various functions in the set of functions.

Optionally, Step 302 may further include:
receiving the user account identifier and a target identifier sent by the terminal, where the target identifier is obtained by the terminal by querying, according to the preset trigger instruction, a pre-stored correspondence relation between a trigger instruction and a device function identifier, and the target identifier includes a device identifier of the target device and an identifier of the target function;
determining, according to the user account, a relation list corresponding to the user account, where the relation list records a pre-established correspondence relation between a device function identifier and function display information; and
querying the relation list to determine the display information of the target function corresponding to the target identifier.

Optionally, Step 302 may further include:
receiving the user account identifier and the device identifier of the target device, sent by the terminal, where the device identifier of the target device is obtained by the terminal by querying, according to the preset trigger instruction, a pre-stored correspondence relation between a trigger instruction and the device identifier;
determining, according to the user account, a relation list corresponding to the user account, where the relation list records a pre-established correspondence relation between a device identifier and function display information; and
querying the relation list to determine the function display information corresponding to the device identifier of the target device.

Step 303 may further include:
sending the function display information corresponding to the device identifier of the target device to the terminal, where the terminal is configured to display, according to the function display information corresponding to the device identifier of the target device, a trigger button of a function corresponding to the device identifier of the target device, and the trigger button of the function corresponding to the device identifier of the target device includes the trigger button of the target function.

Optionally, Step 302 may further include:
determining, according to the user account, a device identifier list of devices bound to the user account, where the device identifier list includes a device identifier of the target device and the display information of the target function.

Step 303 may further include:
sending the device identifier list of the devices bound to the user account to the terminal, where the terminal is configured to display the device identifier list, and the display information of the target function is displayed in the form of the trigger button of the target function.

Optionally, Step 302 may further include:
determining, according to the user account, a device identifier list of devices bound to the user account, where the device identifier list includes a device identifier of the target device;
sending the device identifier list to the terminal, where the terminal is configured to display the device identifier list and receive a touch instruction generated by triggering the device identifier of the target device;
receiving the touch instruction sent by the terminal; and
determining, according to the touch instruction, display information of a control interface corresponding to the device identifier of the target device, where the display information of the control interface includes the display information of the target function.

Step 303 may further include:
sending the display information of a control interface to the terminal, where the terminal is configured to display the control interface according to the display information of the control interface, and the control interface includes the trigger button of the target function.

Optionally, the target device is a camera, and the target function is a talkback function.

In conclusion, in the method for starting a target function according to this embodiment of the present invention, by receiving a user account identifier sent by the terminal, display information of the target function of the target device bound to the user account is acquired, and the display information of the target function is sent to the terminal, so that the terminal may display the trigger button of the target function according to the display information of the target function, and start the target function according to a starting instruction generated by triggering the trigger button of the target function. It is possible to start the target function without the need to log in, in the foreground, into a client side and enter a control interface, thereby solving the problem, in the related technologies, of a complex process in starting a target function, and achieving an effect of simplifying the process in starting the target function.

Fig. 4-1 is a flowchart of a method for starting a target function according to still another embodiment. The method is illustrated for use in the implementation environment as shown in Fig.1. Referring to Fig. 4-1, the method for starting a target function may include the following steps:
In Step 401, the terminal receives a preset trigger instruction associated with a target function.

The terminal may be the terminal 160 in the implementation environment as shown in Fig. 1, the target function refers to the target function of a target device which may be the target device 120 in the implementation environment as shown in Fig. 1. For example, the target device 120 may be a smart camera, a smart power plug, a smart wristband, a smart television, an infrared remote controller, and so on. This embodiment of the present invention is described by taking an example in which the target device 120 is a smart camera and the target function may be a talkback function of the smart camera.

In this embodiment of the present invention, the terminal 160 may have installed therein a client side (e.g. client-side software) associated with the target device 120, and a user account may be logged in the client side. By means of the terminal 160, a binding relationship may be established between the target device 120 and the user account logged in the client side associated with the target device 120. After the binding relationship between the target device 120 and the user account is established, the user may control, on the terminal 160, the target device 120. For example, by means of the server 140, the terminal 160 may bind the target device 120 with the user account. The server 140 may store a correspondence relation which indicates the correspondence between the device identifier of the target device 120 and the user account. For example, by means of the server 140, the terminal 160 may bind the smart camera with the user account. Supposing that the device identifier of the smart camera is ID-SXJ and the user account bound with the smart camera is xiaomiyonghu, the server 140 may store a correspondence relation between the user account xiaomiyonghu and the device identifier ID-SXJ, so the target device 120 may upload data to the server 140 in respect of the user account xiaomiyonghu, and the terminal 160 may acquire, from the server 140 according to the user account, data uploaded by the target device 120.

The preset trigger instruction is preset by the user on the terminal 160, the user may operate the terminal 160 with a preset gesture, and trigger the terminal 160 to display an instruction-receiving interface. After triggering the instruction-receiving interface, the user may trigger, on the instruction-receiving interface, the preset trigger instruction associated with the target function; and the terminal 160 may receive, on the instruction-receiving interface, the preset trigger instruction associated with the target function. The instruction-receiving interface may be a screen-lock interface, or other preset interfaces configured to receive an instruction. The user may trigger, by means of a preset operation (for example, a preset gesture operation), the terminal 160 to display the instruction-receiving interface. For example, when the instruction-receiving interface is a voice-receiving interface, the user may trigger the display of the voice-receiving interface by means of an up-swipe gesture or a down-swipe gesture. When the user speaks out, toward the voice-receiving interface currently displayed by the terminal 160, a preset voice clip (for example, "starting the talkback function of the camera"), it is determined that the user has triggered the preset trigger instruction associated with the target function.

For example, please refer to Fig. 4-2, which shows a flowchart of a method for receiving, by the terminal 160, the preset trigger instruction associated with the target function according to the embodiment as shown in Fig. 4-1. Referring to Fig. 4-2, in this embodiment of the present invention, the instruction-receiving interface is a screen-lock interface, and the receiving, by the terminal 160, of the preset trigger instruction associated with the target function may include the following steps.

In Substep 4011, the terminal receives a wake-up instruction for a screen of the terminal, where the wake-up instruction includes: either of a preset grip gesture instruction and a preset button operation instruction, the preset grip gesture instruction is an instruction generated by gripping the terminal with a preset grip gesture, and the preset button operation instruction is an instruction generated by triggering a wake-up button of the terminal with a preset touch gesture.

In a possible implementation, the screen of the terminal 160 currently is in a dormant state (screen-quenching state), and the screen of the terminal 160 needs to be awakened before the terminal 160 is triggered to display an instruction-receiving interface (screen-lock interface).

In this embodiment of the present invention, the user may operate the terminal 160 to trigger a wake-up instruction for the screen of the terminal 160 to awaken the screen of the terminal 160, where the wake-up instruction may include: either of a preset grip gesture instruction and a preset button operation instruction, the preset grip gesture instruction is an instruction generated by gripping the terminal with a preset grip gesture, and the preset button operation instruction is an instruction generated by triggering a wake-up button of the terminal with a preset touch gesture. For example, the user may trigger, by operating a power button of the terminal 160, the wake-up instruction for the screen of the terminal 160.

When the user triggers the wake-up instruction for the screen of the terminal 160, the terminal 160 receives the wake-up instruction for the screen of the terminal 160, which is triggered by the user.

In Substep 4012, the terminal awakens, according to the wake-up instruction, the screen of the terminal, and displays the screen-lock interface.

When the terminal 160 receives the wake-up instruction for the screen of the terminal 160, which is triggered by the user, the screen of the terminal 160 is awakened according to the wake-up instruction, and the screen-lock interface is displayed. The screen-lock interface is the instruction-receiving interface. For example, when the user operates the power button of the terminal 160, the terminal 160 awakens the screen of the terminal 160 and displays the screen-lock interface.

In Substep 4013, the terminal receives, on the screen-lock interface, the preset trigger instruction associated with the target function.

After the terminal 160 displays the screen-lock interface, the user may trigger, on the screen-lock interface of the terminal 160, the preset trigger instruction associated with the target function; and the terminal 160 may receive, on the screen-lock interface, the preset trigger instruction associated with the target function.

When the instruction-receiving interface is the screen-lock interface, the preset trigger instruction may be an instruction triggered by the user with a left-swipe gesture or a right-swipe gesture. For example, the preset trigger instruction may be an instruction triggered by the user with a right-swipe gesture.

In Step 402, the terminal displays the trigger button of the target function according to the preset trigger instruction.

When the preset trigger instruction is received, the terminal 160 may display the trigger button of the target function according to the preset trigger instruction. For example, the terminal 160 may display the trigger button of the talkback function of the smart camera. For example, please refer to Fig. 4-3, which shows a flowchart of a method for displaying, by the terminal 160, the trigger button of the target function according to the preset trigger instruction according to the embodiment as shown in Fig. 4-1. Referring to Fig. 4-3, the method flow may include the following steps.

In Substep 4021, the terminal acquires an identifier of the user account registered in the client side associated with the target device, where the target device has the target function.

In this embodiment of the present invention, the terminal 160 may be installed with a client side associated with the target device 120, the user account may be logged in the client side, and the terminal 160 may acquire an identifier of this user account. For example, the terminal 160 may acquire an identifier of the user account xiaomiyonghu.

In Substep 4022, the terminal acquires, from the server, display information of the target function of the target device bound to the relevant user account.

After acquiring the identifier of the user account logged in the client side associated with the target device 120, the terminal 160 may acquire, from the server 140 according to the user account, the display information of the target function of the target device 120 bound to the user account. For example, the terminal 160 may acquire, from the server 140 according to the user account xiaomiyonghu, the display information of the target function of the target device 120 bound to the user account xiaomiyonghu.

For example, please refer to Fig. 4-4, which shows a flowchart of a method for acquiring, by the terminal 160 from the server 140, the display information of the target function of the target device bound to the user account according to the embodiment as shown in Fig. 4-1. Referring to Fig. 4-4, in this embodiment of the present invention, the acquiring, by the terminal 160 from the server 140, of the display information of the target function of the target device bound to the user account may include the following steps.

In Substep 40221, the terminal sends an identifier of the user account to the server, where the server is configured to display, according to the user account, the display information of the target function of the target device bound to the user account.

The server 140 may store an identifier of the user account and the display information of the target function of the target device 120 bound to the user account. Therefore, the terminal 160 may send the user account identifier to the server 140. For example, the terminal 160 may send the user account identifier xiaomiyonghu to the server 140.

In Substep 40222, the server receives the user account identifier sent by the terminal, where the user account identifier is sent by the terminal after receiving the preset trigger instruction associated with the target function, the user account is the user account logged in the client side associated with the target device, and the target device has the target function.

After the terminal 160 sends the user account identifier to the server 140, the server 140 may receive the user account identifier sent by the terminal 160. For example, the server 140 may receive the user account identifier xiaomiyonghu sent by the terminal 160. The user account identifier is sent by the terminal 160 after receiving the preset trigger instruction associated with the target function.

In Substep 40223, the server acquires the display information of the target function of the target device bound to the user account.

After receiving the user account identifier sent by the terminal 160, the server 140 may acquire, according to the user account, the display information of the target function of the target device 120 bound to the user account. For example, the server 140 may acquire, based on the user account identifier xiaomiyonghu, the display information of the target function of the target device 120 that is bound to the user account identifier xiaomiyonghu. The server 140 may store a correspondence relation between the user account identifier and the display information of a function of the target device. The server 140 may query, according to the user account identifier xiaomiyonghu, the correspondence relation between the user account identifier and the display information of the function of the device, so as to determine the display information of the target function of the target device 120 bound to the user account xiaomiyonghu. For example, the server 140 may determine, based on the user account identifier xiaomiyonghu, the display information of the talkback function of the smart camera bound to the user account for xiaomiyonghu. The display information of a target function may include one or more graphical elements to be displayed on the terminal 160 in relation to that function, for example a trigger button for triggering implementation of the target function.

In Substep 40224, the server sends the display information of the target function to the terminal, where the terminal is configured to display, according to the received display information of the target function, a trigger button of the target function, and start the target function according to a starting instruction generated by triggering the trigger button of the target function.

After acquiring the display information of the target function, the server 140 may send the display information of the target function to the terminal 160. For example, the server 140 may send the display information of the talkback function of the smart camera to the terminal 160.

In Substep 40225, the terminal receives the display information of the target function sent by the server.

When the server 140 sends the display information of the target function to the terminal 160, the terminal 160 may receive the display information of the target function sent by the server 140. For example, the terminal 160 may receive the display information, sent by the server 140, of the talkback function of the smart camera.

In Substep 4023, the terminal displays the trigger button of the target function according to the display information of the target function.

After acquiring the display information of the target function, the terminal 160 may display the trigger button of the target function according to the display information of the target function. For example, the terminal 160 may display the trigger button of the talkback function of the smart camera according to the display information of the talkback function of the smart camera.

In Step 403, the terminal receives a starting instruction generated by triggering the trigger button of the target function.

After the terminal 160 displays the trigger button of the target function, the user may operate the trigger button to trigger the starting instruction of the target function, and the terminal 160 may receive the starting instruction, triggered by the user, of the target function. For example, the user may operate the trigger button of the talkback function of the smart camera to trigger the starting instruction of the talkback function of the smart camera, and the terminal 160 may receive the starting instruction, triggered by the user, of the talkback function of the smart camera.

In Step 404, the terminal starts the target function according to the starting instruction.

After receiving the starting instruction triggered by the user, the terminal 160 may start the target function according to the starting instruction. For example, the terminal 160 starts the talkback function of the smart camera according to the starting instruction of the talkback function of the smart camera.

It should be noted that, in this embodiment of the present invention, one user account may be bound to multiple devices, and each of the devices may have multiple functions. Therefore, when the terminal 160 acquires, from the server 140, the display information of the target function of the target device 120 bound to the user account, the terminal 160 may acquire function display information of functions of all devices that are bound to the user account. The function display information of functions of all devices includes the display information of the target function of the target device 120. Or the terminal 160 may only acquire the display information of the target function of the target device 120. Or the terminal 160 may also only acquire the function display information of the target device 120. Therefore, in Step 404 of the embodiment of the present invention, the displaying, by the terminal 160 according to the preset trigger instruction, the trigger button of the target function may be displayed in any one of the following five implementations.

The first implementation: for example, please refer to Fig. 4-5, which shows a flowchart of a method for displaying, by the terminal 160, a trigger button of the target function according to the preset trigger instruction according to the embodiment as shown in Fig. 4-1. Referring to Fig. 4-5, the method flow may include the following steps.

In Substep 4021a, the terminal acquires the user account identifier registered in the client side associated with the target device, where the target device has the target function.

In this embodiment of the present invention, the terminal 160 may be installed with a client side associated with the target device 120, a user account may be registered in the client side, and the terminal 160 may acquire an identifier of the user account. For example, the terminal 160 may acquire the user account identifier xiaomiyonghu.

In Substep 4022a, the terminal sends the user account identifier to the server, where the server is configured to determine, according to the user account, the function display information of various functions in a set of functions, the set of functions is a set of functions of the device bound to the user account, and the set of functions includes the target function of the target device.

The server 140 may store the user account identifier and the function display information of the function of the device bound to the user account. Therefore, the terminal 160 may send the user account identifier to the server 140. For example, the terminal 160 sends an identifier of the user account xiaomiyonghu to the server 140.

In Substep 4023a, the server receives the user account identifier sent by the terminal, where the user account identifier is sent by the terminal after receiving the preset trigger instruction associated with the target function, the user account is the user account logged in the client side associated with the target device, and the target device has the target function.

After the terminal 160 sends the user account identifier to the server 140, the server 140 may receive the user account identifier sent by the terminal 160. For example, the server 140 receives the user account identifier xiaomiyonghu sent by the terminal 160. The user account identifier is sent by the terminal 160 after receiving the preset trigger instruction associated with the target function.

In Substep 4024a, the server determines, according to the user account, function display information of various functions in a set of functions, where the set of functions is a set of functions of the device bound to the user account, and the set of functions includes the target function of the target device.

The server 140 may store a correspondence relation between the user account and the display information of the various functions in the set of functions. The set of functions is a set of functions of the device bound to the user account, and the set of functions includes the target function of the target device 120. Therefore, the server 140 may determine, according to the user account, the function display information of the various functions in the set of functions. For example, the server 140 determines, according to the user account xiaomiyonghu, the function display information of the functions of all devices stored in the user account xiaomiyonghu. And the function display information of the functions of all devices stored in the user account xiaomiyonghu may include the display information of the talkback function of the smart camera (the target device 120).

In Substep 4025a, the server sends the function display information of various functions in the set of functions to the terminal, where the terminal is configured to display, according to the function display information of various functions in the set of functions, trigger buttons of various functions in the set of functions.

After determining the function display information of various functions in the set of functions, the server 140 may send the function display information of various functions in the set of functions to the terminal 160, so that the terminal 160 displays, according to the function display information of various functions in the set of functions, trigger buttons of various functions in the set of functions. The function display information of various functions in the set of functions may include the display information of the target function of the target device 120, for example, the display information of the talkback function of the smart camera.

In Substep 4026a, the terminal receives the function display information, sent by the server, of various functions in the set of functions.

After the server 140 sends the function display information of various functions in the set of functions to the terminal 160, the terminal 160 may receive the function display information, sent by the server 140, of various functions in the set of functions.

In Substep 4027a, the terminal displays, according to the function display information of various functions in the set of functions, trigger buttons of various functions in the set of functions.

After receiving the function display information, sent by the server 140, of various functions in the set of functions, the terminal 160 may display, according to the function display information of various functions in the set of functions, trigger buttons of various functions in the set of functions. The function display information of various functions in the set of functions includes the display information of the target function of the target device 120. Therefore, the terminal 160 may display the trigger button of the target function of the target device 120. For example, the terminal 160 displays the trigger button of the talkback function of the smart camera.

The second implementation: for example, please refer to Fig. 4-6, which shows a flowchart of another method for displaying, by the terminal 160, a trigger button of the target function according to the preset trigger instruction according to the embodiment as shown in Fig. 4-1. Referring to Fig. 4-6, the method flow may include the following steps.

In Substep 4021b, the terminal acquires the user account logged in the client side associated with the target device, where the target device has the target function.

In this embodiment of the present invention, the terminal 160 may be installed with a client side associated with the target device 120. A user account may be logged in the client side, and the terminal 160 may acquire an identifier of the user account. For example, the terminal 160 may acquire an identifier of the user account xiaomiyonghu.

In Substep 4022b, the terminal queries a pre-stored correspondence relation between a trigger instruction and a device function identifier, so as to regard the device function identifier corresponding to the preset trigger instruction as a target identifier, where the target identifier includes a device identifier of the target device and an identifier of the target function.

In this embodiment of the present invention, the terminal 160 may store a correspondence relation between the trigger instruction and the device function identifier. After receiving the preset trigger instruction, the terminal 160 may query, according to the preset trigger instruction, the pre-stored correspondence relation between the trigger instruction and the device function identifier, and regard the device function identifier corresponding to the preset trigger instruction as the target identifier, where the target identifier includes a device identifier of the target device and an identifier of the target function.

The correspondence relation, stored in the terminal 160, between the trigger instruction and the device function identifier may be as shown in Table 1 as blow.

**Table 1**

| Trigger instruction | Device function identifier | Function description |
|---|---|---|
| Trigger instruction 1 | ID-SXJ-DJ | Talkback function of the smart camera |
| Trigger instruction 2 | ID-SXJ-SX | Camera function of the smart camera |
| Trigger instruction 3 | ID-CZ-KQ | Starting function of smart power plug |
| Trigger instruction 4 | ID-YKQ-V+ | Volume increasing function of the infrared remote controller |

Supposing that the preset trigger instruction received by the terminal 160 is a trigger instruction 1, the trigger instruction 1 may be an instruction triggered by the user with a right-swipe gesture, the terminal 160 queries the correspondence relation as shown in Table 1, and determines that the device function identifier corresponding to the preset trigger instruction is ID-SXJ-DJ. Therefore, the terminal 160 regards the device function identifier ID-SXJ-DJ as a target identifier, where in the target identifier, SXJ may be the device identifier of the smart camera, and DJ may be the identifier of the talkback function.

In Substep 4023b, the terminal sends the user account and the target identifier to the server, where the server is configured to determine, according to the user account, a relation list corresponding to the user account, the relation list records a pre-established correspondence relation between a device function identifier and function display information.

After acquiring the user account and the target identifier, the terminal 160 may send the user account and the target identifier to the server 140, so that the server 140 determines, according to the user account, a relation list corresponding to the user account, and determines, according to the target identifier, the display information of the target function corresponding to the target identifier. The relation list corresponding to the user account records a pre-established correspondence relation between a device function identifier and function display information. For example, the terminal 160 sends the user account identifier xiaomiyonghu and the target identifier ID-SXJ-DJ to the server 140.

In Substep 4024b, the server receives the user account and the target identifier sent by the terminal, where the target identifier is obtained by the terminal by querying, according to the preset trigger instruction, a pre-stored correspondence relation between a trigger instruction and the device function identifier, and the target identifier includes the device identifier of the target device and the identifier of the target function.

After the terminal 160 sends the user account and the target identifier to the server 140, the server 140 may receive the user account and the target identifier sent by the terminal 160. For example, the server 140 receives the user account identifier xiaomiyonghu and the target identifier ID-SXJ-DJ sent by the terminal 160.

In Substep 4025b, the server determines, according to the user account, a relation list corresponding to the user account, where the relation list records a pre-established correspondence relation between a device function identifier and function display information.

The server 140 may store multiple user accounts, and each of the user accounts may be corresponding to one relation list in which a pre-established correspondence relation between a device function identifier and function display information is recorded. After receiving the user account and the target identifier sent by the terminal 160, the server 140 may determine, according to the user account, a relation list corresponding to the user account. For example, the server 140 determines, according to the user account xiaomiyonghu, a relation list corresponding to the user account xiaomiyonghu.

In Substep 4026b, the server queries the relation list to determine the display information of the target function corresponding to the target identifier.

After determining the relation list corresponding to the user account, the server 140 may query, according to the target identifier, the relation list to determine the display information of the target function corresponding to the target identifier. Supposing that the relation list corresponding to the user account xiaomiyonghu may be as shown in the following Table 2:

**Table 2**

| Device function identifier | Function display information |
|---|---|
| ID-SXJ-DJ | Display information of the talkback function of the smart camera |
| ID-SXJ-SX | Display information of the camera function of the smart camera |
| ID-CZ-KQ | Display information of the starting function of smart power plug |
| ID-YKQ-V+ | Display information of the volume increasing function of the infrared remote controller |

The server 140 queries, according to the target identifier ID-SXJ-DJ, the relation list as shown in Table 2. It is determined that the display information of the target function corresponding to the target identifier ID-SXJ-DJ is the display information of the talkback function of the smart camera.

In Substep 4027b, the server sends the display information of the target function to the terminal, where the terminal is configured to display, according to the display information of the target function, the trigger button of the target function, and start the target function according to the starting instruction generated by triggering the trigger button of the target function.

After determining the display information of the target function corresponding to the target identifier, the server 140 may send the display information of the target function to the terminal 160, so that the terminal 160 displays, according to the display information of the target function, the trigger button of the target function, and starts the target function according to the starting instruction generated by triggering the trigger button of the target function. For example, the server 140 sends the display information of the talkback function of the smart camera to the terminal 160.

In Substep 4028b, the terminal receives the display information, sent by the server, of the target function corresponding to the target identifier, where the display information of the target function corresponding to the target identifier is determined by the server by querying the relation list.

After the server 140 sends the display information of the target function corresponding to the target identifier to the terminal 160, the terminal 160 may receive the display information, sent by the server 140, of the target function corresponding to the target identifier. For example, the terminal 160 receives the display information of the talkback function of the smart camera.

In Substep 4029b, the terminal displays the trigger button of the target function according to the display information of the target function.

After receiving the display information, sent by the server 140, of the target function corresponding to the target identifier, the terminal 160 may display the trigger button of the target function according to the display information of the target function corresponding to the target identifier. For example, the terminal 160 displays the trigger button of the talkback function of the smart camera according to the display information of the talkback function of the smart camera.

The third implementation: for example, please refer to Fig. 4-7, which shows a flowchart of still another method for displaying, by the terminal 160, the trigger button of the target function according to the preset trigger instruction according to the embodiment as shown in Fig. 4-1. Referring to Fig. 4-7, the method flow may include the following steps.

In Substep 4021c, the terminal acquires the user account logged in the client side associated with the target device, where the target device has the target function.

In this embodiment of the present invention, the terminal 160 may be installed with a client side associated with the target device 120. A user account may be logged in the client side, and the terminal 160 may acquire the user account. For example, the terminal 160 acquires an identifier of the user account xiaomiyonghu.

In Substep 4022c, the terminal queries a pre-stored correspondence relation between a trigger instruction and the device identifier, and regards the device identifier corresponding to the preset trigger instruction as the device identifier of the target device.

In this embodiment of the present invention, the terminal 160 may store the correspondence relation between the trigger instruction and the device identification. Therefore, after receiving the preset trigger instruction, the terminal 160 may query, according to the preset trigger instruction, the pre-stored correspondence relation between the trigger instruction and the device identifier, and regard the device identifier corresponding to the preset trigger instruction as the device identifier of the target device.

The correspondence relation, stored in the terminal 160, between the trigger instruction and the device function identifier may be as shown in Table 3 as blow.

**Table 3**

| Trigger instruction | Device identifier | Device description |
|---|---|---|
| Trigger instruction A | ID-SXJ | Smart camera |
| Trigger instruction B | ID-CZ | Smart power plug |
| Trigger instruction C | ID-YKQ | Infrared remote controller |

Supposing that the preset trigger instruction received by the terminal 160 is a trigger instruction A, the trigger instruction A may be an instruction triggered by the user with a right-swipe gesture, the terminal 160 queries the correspondence relation as shown in Table 3, and determines that the device identifier corresponding to the preset trigger instruction is ID-SXJ. Therefore, the terminal 160 regards the device identifier ID-SXJ as the device identifier of the target device.

In Substep 4023c, the terminal sends the user account and the device identifier of the target device to the server, where the server is configured to determine, according to the user account, a relation list corresponding to the user account, and the relation list records a pre-established correspondence relation between a device identifier and function display information.

After acquiring the user account and the device identifier of the target device, the terminal 160 may send the user account and the device identifier of the target device to the server 140, so that the server 140 determines, according to the user account, a relation list corresponding to the user account, and determines, according to the device identifier of the target device, the function display information corresponding to the device identifier of the target device. The relation list corresponding to the user account records a pre-established correspondence relation between a device identifier and function display information. For example, the terminal 160 sends the user account identifier xiaomiyonghu and the device identifier ID-SXJ of the target device to the server 140.

In Substep 4024c, the server receives the user account and the device identifier of the target device sent by the terminal, where the device identifier of the target device is obtained by the terminal by querying, according to the preset trigger instruction, the pre-stored correspondence relation between the trigger instruction and the device identifier.

After the terminal 160 sends the user account and the device identifier of the target device to the server 140, the server 140 may receive the user account and the device identifier of the target device sent by the terminal 160. For example, the server 140 receives the user account xiaomiyonghu and the device identifier ID-SXJ of the target device sent by the terminal 160.

In Substep 4025c, the server determines, according to the user account, a relation list corresponding to the user account, where the relation list records a pre-established correspondence relation between a device identifier and function display information.

The server 140 may store multiple user accounts, and each of the user account may be corresponding to one relation list in which a pre-established correspondence relation between a device identifier and function display information is recorded. After receiving the user account and the device identifier of the target device sent by the terminal 160, the server 140 may determine, according to the user account, a relation list corresponding to the user account. For example, the server 140 determines, according to the user account xiaomiyonghu, a relation list corresponding to the user account xiaomiyonghu.

In Substep 4026c, the server queries the relation list to determine the function display information corresponding to the device identifier of the target device.

After determining the relation list corresponding to the user account, the server 140 may query, according to the device identifier of the target device, the relation list to determine the function display information corresponding to the device identifier of the target device. The relation list corresponding to the user account xiaomiyonghu may be as shown in the following Table 4:

**Table 4**

| Device identifier | Function display information |
|---|---|
| ID-SXJ | Display information of the talkback function of the smart camera |
| | Display information of the camera function of the smart camera |
| ID-CZ-KQ | Display information of the starting function of smart power plug |
| ID-YKQ-V+ | Display information of the volume increasing function of the infrared remote controller |

The server 140 queries, according to the device identifier ID-SXJ of the target device, the relation list as shown in Table 4, and determines that the function display information corresponding to the device identifier ID-SXJ of the target device is: the display information of the talkback function of the smart camera and the display information of the camera function of the smart camera.

In Substep 4027c, the server sends the function display information corresponding to the device identifier of the target device to the terminal, where the terminal is configured to display, according to the function display information corresponding to the device identifier of the target device, the trigger button of a function corresponding to the device identifier of the target device, and the trigger button of the function corresponding to the device identifier of the target device includes the trigger button of the target function.

After determining the function display information corresponding to the device identifier of the target device, the server 140 may send the function display information corresponding to the device identifier of the target device to the terminal 160, so that the terminal 160 displays, according to the function display information corresponding to the device identifier of the target device, a trigger button of a function corresponding to the device identifier of the target device, where the trigger button of the function corresponding to the device identifier of the target device includes the trigger button of the target function. For example, the server 140 sends the display information of the talkback function of the smart camera and the display information of the camera function of the smart camera to the terminal 160.

In Substep 4028c, the terminal receives the function display information, sent by the server, corresponding to the device identifier of the target device, where the function display information corresponding to the device identifier of the target device is determined by the server by querying the relation list.

After the server 140 sends the function display information corresponding to the device identifier of the target device to the terminal 160, the terminal 160 may receive the function display information, sent by the server 140, corresponding to the device identifier of the target device. For example, the terminal 160 may receive the display information of the talkback function of the smart camera and the display information of the camera function of the smart camera, which are sent by the server 140.

In Substep 4029c, the terminal displays, according to the function display information corresponding to the device identifier of the target device, a trigger button of a function corresponding to the device identifier of the target device, where the trigger button of the function corresponding to the device identifier of the target device includes the trigger button of the target function.

After receiving the function display information, sent by the server 140, corresponding to the device identifier of the target device, the terminal 160 may display, according to the function display information corresponding to the device identifier of the target device, a trigger button of a function corresponding to the device identifier of the target device, where the trigger button of the function corresponding to the device identifier of the target device includes the trigger button of the target function. For example, the terminal 160 may display, according to the display information of the talkback function of the smart camera and the display information of the camera function of the smart camera, the trigger button of the talkback function of the smart camera and the trigger button of the camera function of the smart camera, where the trigger button of the talkback function of the smart camera may be the trigger button of the target function.

The fourth implementation: for example, please refer to Fig. 4-8, which shows a flowchart of still another method for displaying, by the terminal 160, the trigger button of the target function according to the preset trigger instruction according to the embodiment as shown in Fig. 4-1. Referring to Fig. 4-8, the method flow may include the following steps.

In Substep 4021d, the terminal acquires the user account logged in the client side associated with the target device, where the target device has the target function.

In this embodiment of the present invention, the terminal 160 may be installed with a client side associated with the target device 120. A user account may be logged in the client side, and the terminal 160 may acquire the user account. For example, the terminal 160 acquires an identifier of the user account xiaomiyonghu.

In Substep 4022d, the terminal sends the user account identifier to the server, where the server is configured to determine, according to the user account, a device identifier list of devices bound to the user account, and the device identifier list includes the device identifier of the target device and the display information of the target function.

After acquiring the user account, the terminal 160 sends the user account to the server 140, so that the server 140 determines, according to the user account, a device identifier list of the device bound to the user account, and the device identifier list includes the device identifier of the target device and the display information of the target function. For example, the terminal 160 sends the user account identifier xiaomiyonghu to the server 140.

In Substep 4023d, the server receives the user account identifier sent by the terminal, where the user account identifier is sent by the terminal after receiving the preset trigger instruction associated with the target function, the user account is the user account logged in the client side associated with the target device, and the target device has the target function.

After the terminal 160 sends the user account identifier to the server 140, the server 140 may receive the user account identifier sent by the terminal 160. For example, the server 140 receives an identifier of the user account xiaomiyonghu sent by the terminal 160.

In Substep 4024d, the server determines, according to the user account, a device identifier list of the device bound to the user account, where the device identifier list includes the device identifier of the target device and the display information of the target function.

The server 140 may store multiple user accounts, each of the user accounts may be bound to multiple devices, and each of the devices may have one device identifier. Therefore, the server may store a device identifier list of the device bound to the user account, and the device identifier list includes the device identifier of the target device and the display information of the target function. For example, the device identifier list of the device bound to the user account xiaomiyonghu may be as shown in the following Table 5:

**Table 5**

| Device identifier | Function display information |
|---|---|
| ID-CZ | Display information of the starting function of smart power plug |
| ID-YKQ | Display information of the volume increasing function of the infrared remote controller |
| ID-SXJ | Display information of the talkback function of the smart camera |
| | Display information of the camera function of the smart camera |

In Substep 4025d, the server sends the terminal the device identifier list of the device bound to the user account, where the terminal is configured to display the device identifier list, and the display information of the target function is displayed in the form of the trigger button of the target function.

After determining the device identifier list of the device bound to the user account, the server 140 may send the device identifier list of the devices bound to the user account to the terminal 160, so that the terminal 160 displays the device identifier list. For example, the server 140 sends the device identifier list as shown in Table 5 to the terminal 160.

In Substep 4026d, the terminal receives the device identifier list, sent by the server, of the device bound to the user account.

After the server 140 sends the device identifier list of the device bound to the user account to the terminal 160, the terminal 160 may receive the device identifier list, sent by the server 140, of the device bound to the user account. For example, the terminal 160 receives the device identifier list as shown in Table 5, which is sent by the server 140.

In Substep 4027d, the terminal displays the device identifier list, where the display information of the target function is displayed in the form of the trigger button of the target function.

After receiving the device identifier list sent by the server 140, the terminal 160 may display the device identifier list, where the function display information in the device identifier list is displayed in the form of the trigger button. The device identifier list includes the device identifier of the target device and the display information of the target function. Therefore, the terminal 160 may display the trigger button of the target function. For example, the terminal 160 may display the trigger button of the talkback function of the smart camera. It should be noted that in practical application, when the terminal 160 displays the device identifier list, it is possible that a name of the device is displayed, but the device identifier is not displayed. For example, please refer to Fig. 4-9, which shows an example of a display interface diagram of the terminal 160. Referring to Fig. 4-9, the terminal 160 currently displays an interface 450 in which a device identifier list is displayed. The device identifier list includes: a name of a smart device such as a smart power plug, an infrared remote controller, a smart camera or the like, where the interface also displays a trigger button 454 for starting the smart power plug, a trigger button 453 for increasing volume of the infrared remote controller, a button 451 for triggering the talkback function of the smart camera, and a button 452 for triggering the camera function of the smart camera. When the user clicks the button 451 for triggering the talkback function of the smart camera, the talkback function of the smart camera may be started.

The fifth implementation: for example, please refer to Fig. 4-10, which shows a flowchart of still another method for displaying, by the terminal 160, the trigger button of the target function according to the preset trigger instruction according to the embodiment as shown in Fig. 4-1. Referring to Fig. 4-8, the method flow may include the following steps.

In Substep 4021e, the terminal acquires the user account logged in the client side associated with the target device, where the target device has the target function.

In this embodiment of the present invention, the terminal 160 may be installed with a client side associated with the target device 120. A user account may be logged in the client side, and the terminal 160 may acquire the user account. For example, the terminal 160 may acquire the user account identifier xiaomiyonghu.

In Substep 4022e, the terminal sends an identifier of the user account to the server, where the server is configured to determine, according to the user account, a device identifier list of devices bound to the user account, and the device identifier list includes the device identifier of the target device.

After acquiring the user account identifier, the terminal 160 sends the user account identifier to the server 140, so that the server 140 determines, according to the user account, the device identifier list of the device bound to the user account. For example, the terminal 160 sends the user account xiaomiyonghu to the server 140.

In Substep 4023e, the server receives the user account identifier sent by the terminal, where the user account identifier is sent by the terminal after receiving the preset trigger instruction associated with the target function, the user account is the user account logged in the client side associated with the target device, and the target device has the target function.

When the terminal 160 sends the user account identifier to the server 140, the server 140 may receive the user account identifier sent by the terminal 160. For example, the server 140 receives an identifier of the user account xiaomiyonghu sent by the terminal 160.

In Substep 4024e, the server determines, according to the user account, a device identifier list of the device bound to the user account, where the device identifier list includes the device identifier of the target device.

The server 140 may store multiple user accounts, each of the user accounts may be bound to multiple devices, and each of the devices may have one device identifier. Therefore, the server may store a device identifier list of devices bound to the user account, and the device identifier list includes the device identifier of the target device. For example, the device identifier list of the devices bound to the user account xiaomiyonghu may be as shown in the following Table 6:

**Table 6**

| Device identifier |
|---|
| ID-CZ |
| ID-YKQ |
| ID-SXJ |

Referring to Table 6, where ID-CZ is the device identifier of the smart power plug, ID-YKQ is the device identifier of the infrared remote controller, and ID-SXJ is the device identifier of the smart camera. In this embodiment of the present invention, the target device may be the smart camera. Therefore, it may be known by referring to Table 6 that the device identifier list of the devices bound to the user account xiaomiyonghu includes the device identifier of the target device.

In Substep 4025e, the server sends the device identifier list to the terminal, where the terminal is configured to display the device identifier list and receive a touch instruction generated by triggering the device identifier of the target device.

After determining the device identifier list of the devices bound to the user account, the server 140 may send the device identifier list to the terminal 160, so that the terminal 160 displays the device identifier list. For example, the server 140 sends the device identifier list as shown in Table 6 to the terminal 160.

In Substep 4026e, the terminal receives the device identifier list, sent by the server, of the device bound to the user account.

When the server 140 sends the device identifier list to the terminal 160, the terminal 160 may receive the device identifier list sent by the server 140. For example, the terminal 160 receives the device identifier list as shown in Table 6, which is sent by the server 140.

In Substep 4027e, the terminal displays the device identifier list.

After receiving the device identifier list sent by the server 140, the terminal 160 may display the device identifier list. It should be noted that when the terminal 160 displays the device identifier list, it is possible that the names of the devices corresponding to the device identifier in the device identifier list are displayed, but the device identifier is not displayed. For example, please refer to Fig. 4-11, which shows another display interface diagram of the terminal 160. Referring to Fig. 4-11, the terminal 160 currently displays an interface 460 in which a device identifier list is displayed. The device identifier list includes: the names of a smart device such as a smart power plug, an infrared remote controller, a smart camera or the like.

In Substep 4028e, the terminal receives a touch instruction generated by triggering the device identifier of the target device.

After the terminal 160 displays the device identifier list, the user may operate the device identifier displayed in the device identifier list displayed by the terminal 160 to trigger the touch instruction of the device identifier of the target device. For example, as shown in Fig. 4-11, when the user clicks the smart camera displayed item currently displayed by the terminal 160, the touch instruction of the smart camera may be triggered. The terminal 160 may receive the touch instruction generated by the user's triggering of the device identifier of the target device. For example, the terminal 160 receives the touch instruction generated by triggering the smart camera display item.

In Substep 4029e, the terminal sends the touch instruction to the server, where the server is configured to determine, according to the touch instruction, display information of a control interface corresponding to the device identifier of the target device, and the display information of the control interface includes the display information of the target function.

After receiving the touch instruction triggered by the user, the terminal 160 may send the touch instruction to the server 140, so that the server 140 determines, according to the touch instruction, the display information of the control interface corresponding to the device identifier of the target device, where the display information of the control interface includes the display information of the target function. For example, the terminal 160 sends a touch instruction generated by triggering the smart camera display item to the server.

In Substep 4030e, the server receives the touch instruction sent by the terminal.

When the terminal 160 sends the touch instruction to the server 140, the server 140 may receive the touch instruction sent by the terminal 160. For example, the server 140 receives the touch instruction generated by triggering the smart camera displayed item, which is sent by the terminal 160.

In Substep 4031e, the server determines, according to the touch instruction, display information of the control interface corresponding to the device identifier of the target device, where the display information of the control interface includes the display information of the target function.

The touch instruction may carry the device identifier of the target device 120, and the server 140 may store the correspondence relation between the device identifier and the display information of the control interface. After receiving the touch instruction sent by the terminal 160, the server 140 may query, according to the device identifier of the target device 120 in the touch instruction, the correspondence relation between the device identifier and the display information of the control interface, so as to determine the display information of the control interface corresponding to the device identifier of the target device 120. The display information of the control interface includes the display information of the target function. For example, the display information of the control interface may be the display information of the camera interface of the smart camera, and the display information of the control interface may include the display information of the talkback function.

In Substep 4032e, the server sends the display information of the control interface to the terminal, where the terminal is configured to display the control interface according to the display information of the control interface, and the control interface includes the trigger button of the target function.

After determining the display information of the control interface corresponding to the device identifier of the target device 120, the server 140 may send the display information of the control interface to the terminal 160, so that the terminal displays the control interface according to the display information of the control interface. For example, the server 140 sends the display information of the camera interface of the smart camera to the terminal 160. The display information of the camera interface of the smart camera may include the display information of the talkback function.

In Substep 4033e, the terminal receives the display information of the control interface sent by the server.

After the server 140 sends the display information of the control interface to the terminal 160, the terminal 160 may receive the display information of the control interface sent by the server 140. For example, the terminal 160 receives the display information, sent by the server 140, of the camera interface of the smart camera.

In Substep 4034e, the terminal displays the control interface according to the display information of the control interface, where the control interface includes the trigger button of the target function.

After receiving the display information of the control interface sent by the server 140, the terminal 160 may display the control interface according to the display information of the control interface. For example, the terminal 160 displays the camera interface of the smart camera according to the display information of the camera interface of the smart camera.

For example, please refer to Fig. 4-12, which shows still another display interface diagram of the terminal 160. Referring to Fig. 4-12, the terminal 160 currently displays a control interface 470 which is a camera interface of the smart camera. The control interface 470 also displays a button 471 for triggering the talkback function of the smart camera, a button 472 for triggering a switch, and a button 473 for triggering the camera function, where the button 471 for triggering the talkback function may be the trigger button of the target function. When the user clicks the button 471 for triggering the talkback function, the terminal 160 may start the talkback function of the smart camera.

It should be noted that sequencing of the steps of the method for starting a target function according to the embodiments of the present invention may be properly adjusted, and the steps may also be accordingly increased or decreased as the circumstances may require. Any variation method accessible to a person skilled in the art within the technical scope of the present invention shall fall within the scope of protection of the present invention, which is not repeated anymore herein.

In conclusion, the method for starting a target function according to this embodiment of the present invention includes: receiving a preset trigger instruction associated with a target function; displaying a trigger button of the target function according to the preset trigger instruction; receiving a starting instruction generated by triggering the trigger button of the target function; and starting the target function according to the starting instruction. It is possible to start the target function needless of logging, at a foreground, into a client side and entering a control interface, thereby solving the problem, in the related technologies, of a complex process in starting a target function, and achieving an effect of simplifying the process in starting the target function.

The following is the embodiment of the device in the present invention, which may be configured to carry out the embodiment of the method in the present invention. Please refer to the embodiment of the method in the present invention with regard to undisclosed details about the embodiment of the device in the present invention.

Fig. 5-1 is a block diagram of a device for starting a target function 500 of a target device, according to an embodiment. The device for starting a target function 500 may be implemented, in part or in whole, as the terminal 160 in the implementation environment as shown in Fig. 1 by means of software or hardware or a combination of both. Referring to Fig. 5, the device for starting a target function 500 may include:
a first receiving module 510, configured to receive a preset trigger instruction associated with a target function of the target device (which is external to the terminal);
a display module 520, configured to display a trigger button of the target function according to the preset trigger instruction received by the first receiving module 510;
a second receiving module 530, configured to receive a starting instruction generated by triggering the trigger button of the target function displayed by the display module 520; and
a starting module 540, configured to start the target function of the external device, according to the starting instruction received by the second receiving module 530.

In conclusion, by receiving a preset trigger instruction associated with a target function, the device for starting a target function provided by this embodiment of the present invention may display a trigger button of the target function according to the preset trigger instruction, receive a starting instruction generated by triggering the trigger button of the target function, and start the target function according to the starting instruction. It is possible to start the target function needless of logging, at a foreground, into a client side or entering a control interface, thereby solving the problem, in the related technologies, of a complex process in starting a target function, and achieving an effect of simplifying the process in starting the target function.

Optionally, the first receiving module 510 is configured to: receive a wake-up instruction for a screen of a terminal, where the wake-up instruction includes either of a preset grip gesture instruction and a preset button operation instruction, the preset grip gesture instruction is an instruction generated by gripping the terminal with a preset grip gesture, and the preset button operation instruction is an instruction generated by triggering a wake-up button of the terminal with a preset touch gesture; wake up, according to the wake-up instruction, the screen of the terminal, and display a screen-lock interface; and receive, on the screen-lock interface, a preset trigger instruction associated with the target function.

Optionally, referring to Fig. 5-2, which shows a block diagram of the display module 520 provided by the embodiment as shown in Fig. 5-1. Referring to Fig. 5-2, the display module 520 may include:
a first acquiring submodule 521, configured to acquire a user account logged in a client side associated with a target device, where the target device has the target function;
a second acquiring submodule 522, configured to acquire, from a server, display information of the target function of the target device bound to the user account; and
a display submodule 523, configured to display the trigger button of the target function according to the display information of the target function.

Optionally, the second acquiring submodule 522 is configured to: send an identifier of the user account to the server, where the server is configured to determine, according to the user account, function display information of various functions in a set of functions, the set of functions is a set of functions of the device bound to the user account, and the alternative set of functions includes the target function of the target device; and receive the function display information, sent by the server, of various functions in the set of functions; and
the display submodule 523 is configured to display, according to the function display information of various functions in the set of functions, trigger buttons of various functions in the set of functions.

Optionally, the second acquiring submodule 522 is configured to: query a pre-stored correspondence relation between a trigger instruction and a device function identifier so as to regard the device function identifier corresponding to the preset trigger instruction as a target identifier, where the target identifier includes a device identifier of the target device and an identifier of the target function; send the user account and the target identifier to the server, where the server is configured to determine, according to the user account, a relation list corresponding to the user account, the relation list records a pre-established correspondence relation between a device function identifier and function display information; and receive the display information, sent by the server, of the target function corresponding to the target identifier, where the display information of the target function corresponding to the target identifier is determined by the server by querying the relation list.

Optionally, the second acquiring submodule 522 is configured to: query a pre-stored correspondence relation between a trigger instruction and a device identifier so as to regard a device identifier corresponding to the preset trigger instruction as a device identifier of the target device; send the user account identifier and the device identifier of the target device to the server, where the server is configured to determine, according to the user account, a relation list corresponding to the user account, and the relation list records a pre-established correspondence relation between a device identifier and function display information; and receive the function display information, sent by the server, corresponding to the device identifier of the target device, where the function display information corresponding to the device identifier of the target device is determined by the server by querying the relation list; and
the display submodule 523 is configured to display, according to the function display information corresponding to the device identifier of the target device, a trigger button of a function corresponding to the device identifier of the target device, where the trigger button of the function corresponding to the device identifier of the target device includes the trigger button of the target function.

Optionally, the second acquiring submodule 522 is configured to: send an identifier of the user account to the server, where the server is configured to determine, according to the user account, a device identifier list of devices bound to the user account, and the device identifier list includes a device identifier of the target device and the display information of the target function; and receive the device identifier list, sent by the server, of the devices bound to the user account; and
the display submodule 523 is configured to display the device identifier list, where the display information of the target function is displayed in the form of the trigger button of the target function.

Optionally, the second acquiring submodule 522 is configured to: send an identifier of the user account to the server, where the server is configured to determine, according to the user account, a device identifier list of devices bound to the user account, and the device identifier list includes a device identifier of the target device; receive the device identifier list, sent by the server, of the devices bound to the user account; display the device identifier list; receive a touch instruction generated by triggering the device identifier of the target device; send the touch instruction to the server, where the server is configured to determine, according to the touch instruction, display information of a control interface corresponding to the device identifier of the target device, and the display information of the control interface includes the display information of the target function; and receive the display information of the control interface sent by the server; and
the display submodule 523 is configured to display the control interface according to the display information of the control interface, where the control interface includes the trigger button of the target function.

Optionally, the target device is a camera, and the target function is a talkback function.

In conclusion, by receiving a preset trigger instruction associated with a target function, the device for starting a target function provided by this embodiment of the present invention may display a trigger button of the target function according to the preset trigger instruction, receive a starting instruction generated by triggering the trigger button of the target function, and start the target function according to the starting instruction. It is possible to start the target function needless of logging, at a foreground, into a client side and entering a control interface, thereby solving the problem, in the related technologies, of a complex process in starting a target function, and achieving an effect of simplifying the process in starting the target function.

Fig. 6 is a block diagram of another device for starting a target function 600 according to an embodiment. The device for starting a target function 600 may implemented, in part or in whole, as the server 140 in the implementation environment as shown in Fig. 1 by means of software or hardware or a combination of both. Referring to Fig. 6, the device for starting a target function 600 may include:
a receiving module 610, configured to receive an identifier of a user account, sent by the terminal, where the user account identifier is sent by the terminal after receiving a preset trigger instruction associated with a target function, the user account is a user account logged in a client side associated with a target device, and the target device has the target function;
an acquiring module 620, configured to acquire display information of the target function of the target device bound to the user account received by the receiving module 610; and
a sending module 630, configured to send the display information of the target function acquired by the acquiring module 620 to the terminal, where the terminal is configured to: display, according to the display information of the target function, a trigger button of the target function, and start the target function according to a starting instruction generated by triggering the trigger button of the target function.

In conclusion, by receiving a user account identifier sent by the terminal, the device for starting a target function provided by this embodiment of the present invention may acquire the display information of the target function of the target device bound to the user account, and send the display information of the target function to the terminal, so that the terminal may display the trigger button of the target function according to the display information of the target function, and start the target function according to a starting instruction generated by triggering the trigger button of the target function. It is possible to start the target function needless of logging, at a foreground, into a client side and entering a control interface, thereby solving the problem, in the related technologies, of a complex process in starting a target function, and achieving an effect of simplifying the process in starting the target function.

Optionally, the acquiring module 620 is configured to determine, according to the user account, function display information of various functions in a set of functions, where the set of functions is a set of functions of the device bound to the user account, and the set of functions includes the target function of the target device; and
the sending module 630 is configured to send the function display information of various functions in the set of functions to the terminal, where the terminal is configured to display, according to the function display information of various functions in the set of functions, trigger buttons of various functions in the set of functions.

Optionally, the acquiring module 620 is configured to: receive an identifier of the user account and a target identifier, sent by the terminal, where the target identifier is obtained by the terminal by querying, according to the preset trigger instruction, a pre-stored correspondence relation between a trigger instruction and a device function identifier, and the target identifier includes a device identifier of the target device and an identifier of the target function; determine, according to the user account, a relation list corresponding to the user account, where the relation list records a correspondence relation between the pre-established device function identifier and the function display information; and query the relation list to determine the display information of the target function corresponding to the target identifier.

Optionally, the acquiring module 620 is configured to: receive an identifier of the user account and a device identifier of the target device, sent by the terminal, where the device identifier of the target device is obtained by the terminal by querying, according to the preset trigger instruction, a pre-stored correspondence relation between a trigger instruction and the device identifier; determine, according to the user account, a relation list corresponding to the user account, where the relation list records a pre-established correspondence relation between a device identifier and function display information; and query the relation list to determine the function display information corresponding to the device identifier of the target device; and
the sending module 630 is configured to send the function display information corresponding to the device identifier of the target device to the terminal, where the terminal is configured to display, according to the function display information corresponding to the device identifier of the target device, a trigger button of a function corresponding to the device identifier of the target device, and the trigger button of the function corresponding to the device identifier of the target device includes the trigger button of the target function.

Optionally, the acquiring module 620 is configured to determine, according to the user account, a device identifier list of devices bound to the user account, where the device identifier list includes a device identifier of the target device and the display information of the target function; and
the sending module 630 is configured to send the device identifier list of the devices bound to the user account to the terminal, where the terminal is configured to display the device identifier list, and the display information of the target function is displayed in the form of the trigger button of the target function.

Optionally, the acquiring module 620 is configured to: determine, according to the user account, a device identifier list of devices bound to the user account, where the device identifier list includes a device identifier of the target device; send the device identifier list to the terminal, where the terminal is configured to display the device identifier list and receive a touch instruction generated by triggering the device identifier of the target device; receive the touch instruction sent by the terminal; and determine, according to the touch instruction, display information of a control interface corresponding to the device identifier of the target device, where the display information of the control interface includes the display information of the target function; and
the sending module 630 is configured to send the display information of the control interface to the terminal, where the terminal is configured to display the control interface according to the display information of the control interface, and the control interface includes the trigger button of the target function.

Optionally, the target device is a camera, and the target function is a talkback function.

In conclusion, by receiving a user account sent by the terminal, the device for starting a target function provided by this embodiment of the present invention may acquire the display information of the target function of the target device bound to the user account, and send the display information of the target function to the terminal, so that the terminal may display the trigger button of the target function according to the display information of the target function, and start the target function according to a starting instruction generated by triggering the trigger button of the target function. It is possible to start the target function needless of logging, at a foreground, into a client side and entering a control interface, thereby solving the problem, in the related technologies, of a complex process in starting a target function, and achieving an effect of simplifying the process in starting the target function.

Fig. 7 is a block diagram of a device for starting a target function 700 according to an example embodiment. For example, the device 700 may be a mobile telephone, a computer, a digital broadcasting terminal, a message transceiver device, a games console, a tablet device, a medical device, a fitness facility, a personal digital assistant and the like.

Referring to Fig. 7, the device 700 may include one or more components as below: a processor component 702, a memory 704, a power supply component 706, a multimedia component 708, an audio component 710, an input/output (I/O) interface 712, a sensor component 714 and a communication component 716.

The processing component 702 typically controls overall operations of the device 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or may have focus and optical zoom capability.

The audio component 710 is configured to output and/or input audio signals. For example, the audio component 710 includes a microphone configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect open/closed statuses of the device 700, and relative positioning of components, such as the display and the keypad. The sensor component 714 may also detect position changes of the device 700 or its components, presence or absence of user contacts with the device 700, orientation or acceleration/deceleration of the device 700, and temperature changes of the device 700. The sensor component 714 may further include a proximity sensor configured to detect the presence of nearby objects without any physical contact. Moreover, the sensor component 714 may include a light sensor, such as a CMOS or CCD image sensor, for use in imaging applications. In some embodiments, the sensor component 714 may also include an acceleration sensor, a gyroscope sensor, a magnetic sensor, a pressure sensor, or a temperature sensor.

The communication component 716 is configured to facilitate wired or wireless communication between the device 700 and other devices. The device 700 can access a wireless network based on a communication standard, such as WiFi, 2G, 3G, or a combination thereof. In one embodiment, the communication component 716 receives a broadcast signal or broadcast related information from an external broadcast management system via a broadcast channel. In another embodiment, the communication component 716 further includes a near-field communication (NFC) module to facilitate short-range communications. The NFC module, for example, may be implemented based on a radio frequency identification (RFID) technology, an infrared data association (IrDA) technology, an ultra-wideband (UWB) technology, a Bluetooth (BT) technology, and other technologies.

In embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In certain embodiments, there is also provided a non-transitory computer-readable storage medium storing instructions, such as stored in the memory 704, executable by the processor 720 in the device 700, for performing the above-described methods. For example, the non-transitory computer-readable storage medium may be a ROM, a random access memory (RAM), a CD-ROM, a magnetic tape, a floppy disc, an optical data storage device, and the like. For a non-transitory computer-readable storage medium, when an instruction in the storage medium is executable by the processor of the device 700 so that the device 700 may perform a method for starting a target function, the method includes:
receiving a preset trigger instruction associated with a target function;
displaying a trigger button of the target function according to the preset trigger instruction;
receiving a starting instruction generated by triggering the trigger button of the target function; and
starting the target function according to the starting instruction.

Optionally, the receiving a preset trigger instruction associated with a target function includes:
receiving a wake-up instruction for a screen of the terminal, where the wake-up instruction includes: either of a preset grip gesture instruction and a preset button operation instruction, the preset grip gesture instruction is an instruction generated by gripping the terminal with a preset grip gesture, and the preset button operation instruction is an instruction generated by triggering a wake-up button of the terminal with a preset touch gesture;
waking up, according to the wake-up instruction, the screen of the terminal, and displaying a screen-lock interface; and
receiving, on the screen-lock interface, the preset trigger instruction associated with the target function.

Optionally, the displaying a trigger button of the target function according to the preset trigger instruction includes:
acquiring a user account logged in a client side associated with a target device, where the target device has the target function;
acquiring, from a server, display information of the target function of the target device bound to the user account; and
displaying the trigger button of the target function according to the display information of the target function.

Optionally, the acquiring, from a server, display information of the target function of the target device bound to the user account includes:
sending an identifier of the user account to the server, where the server is configured to determine, according to the user account, function display information of various functions in a set of functions, the set of functions is a set of functions of the device bound to the user account, and the set of functions includes the target function of the target device; and
receiving the function display information, sent by the server, of various functions in the set of functions.

The displaying the trigger button of the target function according to the display information of the target function may include:
displaying, according to the function display information of various functions in the set of functions, trigger buttons of various functions in the set of functions.

Optionally, the acquiring, from a server, display information of the target function of the target device bound to the user account includes:
querying a pre-stored correspondence relation between a trigger instruction and a device function identifier, so as to regard the device function identifier corresponding to the preset trigger instruction as a target identifier, where the target identifier includes a device identifier of the target device and an identifier of the target function;
sending an identifier of the user account and the target identifier to the server, where the server is configured to determine, according to the user account, a relation list corresponding to the user account, the relation list records a pre-established correspondence relation between a device function identifier and function display information; and
receiving display information, sent by the server, of the target function corresponding to the target identifier, where the display information of the target function corresponding to the target identifier is determined by the server by querying the relation list.

Optionally, the acquiring, from a server, display information of the target function of the target device bound to the user account includes:
querying a pre-stored correspondence relation between a trigger instruction and a device identifier, so as to regard the device identifier corresponding to the preset trigger instruction as a device identifier of the target device;
sending an identifier of the user account and the device identifier of the target device to the server, where the server is configured to determine, according to the user account, a relation list corresponding to the user account, and the relation list records a pre-established correspondence relation between a device identifier and function display information; and
receiving the function display information, sent by the server, corresponding to the device identifier of the target device, where the function display information corresponding to the device identifier of the target device is determined by the server by querying the relation list.

The displaying the trigger button of the target function according to the display information of the target function may include:
displaying, according to the function display information corresponding to the device identifier of the target device, a trigger button of a function corresponding to the device identifier of the target device, where the trigger button of a function corresponding to the device identifier of the target device includes the trigger button of the target function.

Optionally, the acquiring, from a server, display information of the target function of the target device bound to the user account includes:
sending an identifier of the user account to the server, where the server is configured to determine, according to the user account, a device identifier list of devices bound to the user account, and the device identifier list includes a device identifier of the target device and the display information of the target function; and
receiving the device identifier list, sent by the server, of the devices bound to the user account;

The displaying the trigger button of the target function according to the display information of the target function may include:
displaying the device identifier list, where the display information of the target function is displayed in the form of the trigger button of the target function.

Optionally, the acquiring, from a server, display information of the target function of the target device bound to the user account includes:
sending the user account to the server, where the server is configured to determine, according to the user account, a device identifier list of devices bound to the user account, and the device identifier list includes a device identifier of the target device;
receiving the device identifier list, sent by the server, of the devices bound to the user account;
displaying the device identifier list;
receiving a touch instruction generated by triggering the device identifier of the target device;
sending the touch instruction to the server, where the server is configured to determine, according to the touch instruction, display information of a control interface corresponding to the device identifier of the target device, and the display information of the control interface includes the display information of the target function; and
receiving the display information of the control interface sent by the server.

The displaying the trigger button of the target function according to the display information of the target function includes:
displaying the control interface according to the display information of the control interface, where the control interface includes the trigger button of the target function.

Optionally, the target device is a camera, and the target function is a talkback function.

Fig. 8 is a block diagram of a device for starting a target function 800 according to an embodiment. For example, the device 800 may be provided with a server. Referring to Fig. 8, the device 800 includes a processor component 822 that further includes one or more processors, and memory resources represented by a memory 832 for storing instructions executable by the processing component 822, such as application programs. The application programs stored in the memory 832 may include one or more modules each corresponding to a set of instructions. Further, the processing component 822 is configured to execute the instructions to perform the above described methods for starting a target function.

The device 800 may also include a power supply component 826 configured to perform power management of the device 800, wired or wireless network interface(s) 850 configured to connect the device 800 to a network, and an I/O interface 858. The device 800 may operate based on an operating system stored in the memory 832, such as Windows ServerTM, Mac OS XTM, UnixTM, LinuxTM, FreeBSDTM, and the like.

Fig. 9 is a structural schematic diagram of a system for starting a target function 900 according to an embodiment. Referring to Fig. 9, the system for starting a target function 900 may include: a terminal 910 and a server 920.

The terminal 910 includes a device for starting a target function as shown in Fig. 5-1 or Fig. 7.

The server 920 includes a device for starting a target function as shown in Fig. 6 or Fig. 8.

In conclusion, by receiving, by the terminal, a preset trigger instruction associated with a target function, the system for starting a target function provided by this embodiment of the present invention may display a trigger button of the target function according to the preset trigger instruction, receive a starting instruction generated by triggering the trigger button of the target function, and start the target function according to the starting instruction. It is possible to start the target function needless of logging, at a foreground, into a client side and entering a control interface, thereby solving the problem, in the related technologies, of a complex process in starting a target function, and achieving an effect of simplifying the process in starting the target function.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as only, with a true scope of the invention being indicated by the following claims.

It will be appreciated that the present invention is not limited to the exact construction that has been described above and illustrated in the accompanying drawings, and that various modifications and changes can be made without departing from the scope thereof as defined by the appended claims.

## Claims

1. A method for starting a target function of a target device, the method comprising:
receiving (201) at a terminal a preset trigger instruction associated with a target function of a target device external to said terminal;
displaying (202) on the terminal a trigger button of the target function according to the preset trigger instruction;
receiving (203) at the terminal a starting instruction generated by triggering of the trigger button ; and
starting (204) the target function of the external device according to the starting instruction.

2. The method of claim 1, wherein the receiving a preset trigger instruction associated with a target function comprises:
receiving (4011) a wake-up instruction for a screen of the terminal, wherein the wake-up instruction comprises: either one of a preset grip gesture instruction and a preset button operation instruction, the preset grip gesture instruction is an instruction generated by gripping the terminal with a preset grip gesture, and the preset button operation instruction is an instruction generated by triggering a wake-up button of the terminal with a preset touch gesture;
waking up (4012), according to the wake-up instruction, the screen of the terminal, and displaying a screen-lock interface; and
receiving (4013), on the screen-lock interface, the preset trigger instruction associated with the target function.

3. The method of claim 1 or 2, wherein
the displaying (202) of a trigger button of the target function according to the preset trigger instruction comprises:
acquiring (4021) an identifier of a user account, logged in a client side associated with the target device having the target function;
acquiring (4022), from a server, display information of the target function of the target device bound to the user account; and
displaying (4023) the trigger button of the target function according to the display information of the target function.

4. The method of claim 3, wherein
the acquiring (4022), from a server, of display information of the target function of the target device bound to the user account comprises:
sending (4022a) an identifier of the user account to the server, wherein the server is configured to determine, according to the user account, function display information of various functions in a set of functions, the set of functions is a set of functions of the device bound to the user account and comprises the target function of the target device; and
receiving (4026a) the function display information, sent by the server, of various functions in the set of functions;
the displaying (202) the trigger button of the target function according to the display information of the target function comprises:
displaying (4027a), according to the function display information of various functions in the set of functions, trigger buttons of various functions in the set of functions;
or
wherein the acquiring (4022), from a server, display information of the target function of the target device bound to the user account comprises:
querying (4022b) a pre-stored correspondence relation between a trigger instruction and a device function identifier, to regard a device function identifier corresponding to the preset trigger instruction as a target identifier, wherein the target identifier comprises a device identifier of the target device and an identifier of the target function;
sending (4023b) the user account and the target identifier to the server, wherein the server is configured to determine, according to the user account, a relation list corresponding to the user account, and the relation list records a pre-established correspondence relation between the device function identifier and function display information; and
receiving (4028b) display information, sent by the server, of the target function corresponding to the target identifier, wherein the display information of the target function corresponding to the target identifier is determined by the server by querying the relation list;
or
wherein
the acquiring (4022), from a server, display information of the target function of the target device bound to the user account comprises:
querying (4022c) a pre-stored correspondence relation between a trigger instruction and a device identifier, to regard a device identifier corresponding to the preset trigger instruction as a device identifier of the target device;
sending (4023c) the user account and the device identifier of the target device to the server, wherein the server is configured to determine, according to the user account, a relation list corresponding to the user account, and the relation list records a pre-established correspondence relation between the device identifier and function display information; and
receiving (4028c) the function display information, sent by the server, corresponding to the device identifier of the target device, wherein the function display information corresponding to the device identifier of the target device is determined by the server by querying the relation list;
the displaying (202) the trigger button of the target function according to the display information of the target function comprises:
displaying (4029c), according to the function display information corresponding to the device identifier of the target device, a trigger button of a function corresponding to the device identifier of the target device, wherein the trigger button of the function corresponding to the device identifier of the target device comprises the trigger button of the target function;
or
wherein
the acquiring (4022), from a server, display information of the target function of the target device bound to the user account comprises:
sending (4022d) the user account to the server, wherein the server is configured to determine, according to the user account, a device identifier list of devices bound to the user account, and the device identifier list comprises a device identifier of the target device and the display information of the target function; and
receiving (4026d) the device identifier list, sent by the server, of the devices bound to the user account;
the displaying (202) the trigger button of the target function according to the display information of the target function comprises:
displaying (4027d) the device identifier list, wherein the display information of the target function is displayed in the form of the trigger button of the target function;
or
wherein
the acquiring (4022), from a server, display information of the target function of the target device bound to the user account comprises:
sending (4022e) the user account to the server, wherein the server is configured to determine, according to the user account, a device identifier list of devices bound to the user account, and the device identifier list comprises a device identifier of the target device;
receiving (4026e) the device identifier list, sent by the server, of the devices bound to the user account;
displaying (4027e) the device identifier list;
receiving (4028e) a touch instruction generated by triggering of the device identifier of the target device;
sending (4029e) the touch instruction to the server, wherein the server is configured to determine, according to the touch instruction, display information of a control interface corresponding to the device identifier of the target device, and the display information of a control interface comprises the display information of the target function; and
receiving (4033e) the display information of the control interface sent by the server;
the displaying (202) the trigger button of the target function according to the display information of the target function comprises:
displaying (4034e) the control interface according to the display information of the control interface, wherein the control interface comprises the trigger button of the target function.

5. A method for starting a target function, comprising:
receiving (301) a user account sent by a terminal, wherein the user account is sent by the terminal after receiving a preset trigger instruction associated with a target function, the user account is a user account logged in a client side associated with a target device, and the target device has the target function;
acquiring (302) display information of the target function of the target device bound to the user account; and
sending (303) the display information of the target function to the terminal, wherein the terminal is configured to: display, according to the display information of the target function, a trigger button of the target function, and start the target function according to a starting instruction generated by triggering the trigger button of the target function.

6. The method of claim 5, wherein
the acquiring (301) display information of the target function of the target device bound to the user account comprises:
determining (4023a), according to the user account, function display information of various functions in a set of functions, wherein the set of functions is a set of functions of the device bound to the user account, and the set of functions comprises the target function of the target device; and
the sending (303) the display information of the target function to the terminal comprises:
sending (4025a) the function display information of various functions in the set of functions to the terminal, wherein the terminal is configured to display, according to the function display information of various functions in the set of functions, trigger buttons of various functions in the set of functions;
or
wherein
the acquiring (301) display information of the target function of the target device bound to the user account comprises:
receiving (4024b) the user account and a target identifier sent by the terminal, wherein the target identifier is obtained by the terminal by querying, according to the preset trigger instruction, a pre-stored correspondence relation between a trigger instruction and a device function identifier, and the target identifier comprises a device identifier of the target device and an identifier of the target function;
determining (4025b), according to the user account, a relation list corresponding to the user account, wherein the relation list records a pre-established correspondence relation between the device function identifier and function display information; and
querying (4026b) the relation list to determine the display information of the target function corresponding to the target identifier;
or
wherein
the acquiring (301) display information of the target function of the target device bound to the user account comprises:
receiving (4024bc) the user account and a device identifier of the target device sent by the terminal, wherein the device identifier of the target device is obtained by the terminal by querying, according to the preset trigger instruction, a pre-stored correspondence relation between a trigger instruction and a device identifier;
determining (4025c), according to the user account, a relation list corresponding to the user account, wherein the relation list records a pre-established correspondence relation between the device identifier and function display information; and
querying (4026c) the relation list to determine the function display information corresponding to the device identifier of the target device;
the sending (303) the display information of the target function to the terminal comprises:
sending (4027c) the function display information corresponding to the device identifier of the target device to the terminal, wherein the terminal is configured to display, according to the function display information corresponding to the device identifier of the target device, a trigger button of a function corresponding to the device identifier of the target device, and the trigger button of the function corresponding to the device identifier of the target device comprises the trigger button of the target function;
or
wherein
the acquiring (301) display information of the target function of the target device bound to the user account comprises:
determining (4024d), according to the user account, a device identifier list of devices bound to the user account, wherein the device identifier list comprises a device identifier of the target device and the display information of the target function; and
the sending (303) the display information of the target function to the terminal comprises:
sending (4025d) the device identifier list of the devices bound to the user account to the terminal, wherein the terminal is configured to display the device identifier list, and the display information of the target function is displayed in the form of the trigger button of the target function;
or
wherein
the acquiring (301) display information of the target function of the target device bound to the user account comprises:
determining (4024e), according to the user account, a device identifier list of devices bound to the user account, wherein the device identifier list comprises a device identifier of the target device;
sending (4025e) the device identifier list to the terminal, wherein the terminal is configured to display the device identifier list and receive a touch instruction generated by triggering the device identifier of the target device;
receiving (4030e) the touch instruction sent by the terminal; and
determining (4031e), according to the touch instruction, display information of a control interface corresponding to the device identifier of the target device, wherein the display information of the control interface comprises the display information of the target function;
the sending (303) the display information of the target function to the terminal comprises:
sending (4032e) the display information of the control interface to the terminal, wherein the terminal is configured to display the control interface according to the display information of the control interface, and the control interface comprises the trigger button of the target function.

7. The method of any one of claims 1-6, wherein the target device is a camera, and the target function is a talkback function.

8. A device for starting a target function of a target device, comprising:
a first receiving module (510) configured to receive, at a terminal, a preset trigger instruction associated with a target function of a target device external to said terminal;
a display module (520) configured to display on the terminal a trigger button of the target function according to the preset trigger instruction;
a second receiving module (530) configured to receive at the terminal a starting instruction generated by triggering the trigger button of the target function; and
a starting module (540) configured to start the target function of the external device according to the starting instruction.

9. The device of claim 8, wherein
the first receiving module (510) is configured to: receive a wake-up instruction for a screen of a terminal, wherein the wake-up instruction comprises: either of a preset grip gesture instruction and a preset button operation instruction, the preset grip gesture instruction is an instruction generated by gripping the terminal with a preset grip gesture, and the preset button operation instruction is an instruction generated by triggering a wake-up button of the terminal with a preset touch gesture; wake up, according to the wake-up instruction, the screen of the terminal, and display a screen-lock interface; and receive, on the screen-lock interface, the preset trigger instruction associated with the target function.

10. The device of claim 8 or 9, wherein
the display module (520) comprises:
a first acquiring submodule (521) configured to acquire a user account logged in a client side associated with a target device, wherein the target device has the target function;
a second acquiring submodule (522) configured to acquire, from a server, display information of the target function of the target device bound to the user account; and
a display submodule (523) configured to display the trigger button of the target function according to the display information of the target function.

11. The device of claim 10, wherein
the second acquiring submodule (522) is configured to: send the user account to the server, wherein the server is configured to: determine, according to the user account, function display information of various functions in a set of functions, the set of functions is a set of functions of the device bound to the user account, and the set of functions comprises the target function of the target device; and receive the function display information, sent by the server, of various functions in the set of functions; and
the display submodule (520) is configured to display, according to the function display information of various functions in the set of functions, trigger buttons of various functions in the set of functions;
or
wherein
the second acquiring submodule(522)is configured to: query a pre-stored correspondence relation between a trigger instruction and a device function identifier, so as to regard a device function identifier corresponding to the preset trigger instruction as a target identifier, wherein the target identifier comprises a device identifier of the target device and an identifier of the target function; send the user account and the target identifier to the server, wherein the server is configured to determine, according to the user account, a relation list corresponding to the user account, the relation list records a pre-established correspondence relation between a device function identifier and function display information; and receive display information, sent by the server, of the target function corresponding to the target identifier, wherein the display information of the target function corresponding to the target identifier is determined by the server by querying the relation list;
or
wherein
the second acquiring submodule(522)is configured to: query a pre-stored correspondence relation between a trigger instruction and a device identifier, so as to regard a device identifier corresponding to the preset trigger instruction as a device identifier of the target device; send the user account and the device identifier of the target device to the server, wherein the server is configured to determine, according to the user account, a relation list corresponding to the user account, and the relation list records a pre-established correspondence relation between a device identifier and function display information; and receive the function display information, sent by the server, corresponding to the device identifier of the target device, wherein the function display information corresponding to the device identifier of the target device is determined by the server by querying the relation list; and
the display submodule (520) is configured to display, according to the function display information corresponding to the device identifier of the target device, a trigger button of a function corresponding to the device identifier of the target device, wherein the trigger button of the function corresponding to the device identifier of the target device comprises the trigger button of the target function;
or
wherein
the second acquiring submodule (522) is configured to: send an identifier of the user account to the server, wherein the server is configured to determine, according to the user account, a device identifier list of devices bound to the user account, and the device identifier list comprises a device identifier of the target device and the display information of the target function; and receive the device identifier list, sent by the server, of the devices bound to the user account; and
the display submodule (520) is configured to display the device identifier list, wherein the display information of the target function is displayed in the form of the trigger button of the target function;
or
wherein
the second acquiring submodule (522) is configured to: send an identifier of the user account to the server, wherein the server is configured to determine, according to the user account, a device identifier list of devices bound to the user account, and the device identifier list comprises a device identifier of the target device; receive the device identifier list, sent by the server, of the devices bound to the user account; display the device identifier list; receive a touch instruction generated by triggering of the device identifier of the target device; send the touch instruction to the server, wherein the server is configured to determine, according to the touch instruction, display information of a control interface corresponding to the device identifier of the target device, and the display information of a control interface comprises the display information of the target function; and receive the display information of a control interface sent by the server; and
the display submodule (520) is configured to display the control interface according to the display information of the control interface, wherein the control interface comprises the trigger button of the target function.

12. A device for starting a target function, comprising:
a receiving module (610) configured to receive a user account identifier sent by a terminal, wherein the user account identifier is sent by the terminal after receiving a preset trigger instruction associated with a target function, the user account is a user account logged in a client side associated with a target device, and the target device has the target function;
an acquiring module (620) configured to acquire display information of the target function of the target device bound to the user account; and
a sending module (630) configured to send the display information of the target function to the terminal, wherein the terminal is configured to: display, according to the display information of the target function, a trigger button of the target function, and start the target function according to a starting instruction generated by triggering the trigger button of the target function.

13. The device of claim 12, wherein
the acquiring module (620) is configured to determine, according to the user account, function display information of various functions in a set of functions, wherein the set of functions is a set of functions of the device bound to the user account, and the set of functions comprises the target function of the target device; and
the sending module (630) is configured to send the function display information of various functions in the set of functions to the terminal, wherein the terminal is configured to display, according to the function display information of various functions in the set of functions, trigger buttons of various functions in the set of functions;
or
wherein
the acquiring module (620) is configured to: receive the user account and a target identifier sent by the terminal, wherein the target identifier is obtained by the terminal by querying, according to the preset trigger instruction, a pre-stored correspondence relation between a trigger instruction and a device function identifier, and the target identifier comprises a device identifier of the target device and an identifier of the target function; determine, according to the user account, a relation list corresponding to the user account, wherein the relation list records a pre-established correspondence relation between a device function identifier and function display information; and query the relation list to determine the display information of the target function corresponding to the target identifier;
or
wherein
the acquiring module (620) is configured to: receive the user account and a device identifier of the target device sent by the terminal, wherein the device identifier of the target device is obtained by the terminal by querying, according to the preset trigger instruction, a pre-stored correspondence relation between a trigger instruction and a device identifier; determine, according to the user account, a relation list corresponding to the user account, wherein the relation list records a pre-established correspondence relation between a device identifier and function display information; and query the relation list to determine the function display information corresponding to the device identifier of the target device; and
the sending module (630) is configured to: send the function display information corresponding to the device identifier of the target device to the terminal, wherein the terminal is configured to display, according to the function display information corresponding to the device identifier of the target device, a trigger button of a function corresponding to the device identifier of the target device, and the trigger button of the function corresponding to the device identifier of the target device comprises the trigger button of the target function;
or
wherein
the acquiring module (620) is configured to determine, according to the user account, a device identifier list of devices bound to the user account, wherein the device identifier list comprises a device identifier of the target device and the display information of the target function; and
the sending module (630) is configured to send the device identifier list of the devices bound to the user account to the terminal, wherein the terminal is configured to display the device identifier list, and the display information of the target function is displayed in the form of the trigger button of the target function;
or
wherein
the acquiring module (620) is configured to: determine, according to the user account, a device identifier list of devices bound to the user account, wherein the device identifier list comprises a device identifier of the target device; send the device identifier list to the terminal, wherein the terminal is configured to display the device identifier list and receive a touch instruction generated by triggering the device identifier of the target device; receive the touch instruction sent by the terminal; and determine, according to the touch instruction, display information of a control interface corresponding to the device identifier of the target device, wherein the display information of a control interface comprises the display information of the target function; and
the sending module (630) is configured to send the display information of the control interface to the terminal, wherein the terminal is configured to display the control interface according to the display information of the control interface, and the control interface comprises the trigger button of the target function.

14. The device of any one of claims 8-13, wherein the target device is a camera, and the target function is a talkback function.

15. A computer program product which, when being executed on a processor of an apparatus, performs a method according to any of claims 1 to 7.
